(19) Europäisches Patentamt

European Patent Office

Office européen des brevets

(11) **EP 1 066 948 B1**

(12) **EUROPÄISCHE PATENTSCHRIFT**

(45) Veröffentlichungstag und Bekanntmachung des Hinweises auf die Patenterteilung:
**16.10.2002  Patentblatt 2002/42**

(51) Int Cl.⁷: **B29C 47/22**

(21) Anmeldenummer: **00114486.4**

(22) Anmeldetag: **06.07.2000**

(54) **Strangpresskopf zum Extrusionsblasformen von Kunststoffbehältern**

Extrusion head for extrusion blow moulding of plastic containers

Tête d'extrusion pour la fabrication de corps creux en matière plastique par extrusion-soufflage

(84) Benannte Vertragsstaaten:
**AT BE DE FR IT**

(30) Priorität: **09.07.1999  DE 19931870**

(43) Veröffentlichungstag der Anmeldung:
**10.01.2001   Patentblatt 2001/02**

(73) Patentinhaber: **Feuerherm, Harald**
**D-53840 Troisdorf (DE)**

(72) Erfinder:
• **Feuerherm, Harald, Dipl-Ing.**
**53840 Troisdorf (DE)**
• **Kappen, Günther, Dipl-Ing.**
**53840 Troisdorf (DE)**

(74) Vertreter: **Rohmann, Michael, Dr. et al**
**Patentanwälte**
**Andrejewski, Honke & Sozien**
**Theaterplatz 3**
**45127 Essen (DE)**

(56) Entgegenhaltungen:
**EP-A- 0 885 711        EP-A- 0 945 245**
**DE-A- 2 823 999**

• **PATENT ABSTRACTS OF JAPAN vol. 014, no. 450 (M-1030), 27. September 1990 (1990-09-27) & JP 02 179720 A (SUMITOMO ELECTRIC IND LTD), 12. Juli 1990 (1990-07-12)**
• **PATENT ABSTRACTS OF JAPAN vol. 009, no. 080 (M-370), 10. April 1985 (1985-04-10) & JP 59 209122 A (NIPPON SEIKOSHO KK), 27. November 1984 (1984-11-27)**

**Beschreibung**

Die Erfindung betrifft einen Strangpreßkopf zum Extrusionsblasformen von Kunststoffbehältern mit

einer Ringspaltdüse, die einen Dorn und einen ringförmigen Düsenkörper aufweist,

einer elastisch deformierbaren Hülse, und

Stelleinrichtungen zur radialen Deformierung der elastischen Hülse,

wobei die am düsenaustrittsseitigen Ende angeordnete Hülse einen Düsenspalt begrenzt, dessen Spaltbreite durch axiale Stellbewegungen des Dorns und/oder des Düsenkörpers veränderbar ist und dessen Geometrie durch Deformierung der Hülse während der Extrusion eines schlauchförmigen Vorformlings beeinflußbar ist, und wobei die Hülse an Gleitflächen, welche die Hülse nach oben und unten abstützen, radial beweglich geführt ist.

Ein Strangpreßkopf mit den beschriebenen Merkmalen ist aus DE-A 28 23 999 (Fig. 7) bekannt. Die im Düsenkörper angeordnete Hülse besitzt ein symmetrisches Profil und weist einen zylindrischen Mittelabschnitt sowie identisch ausgebildete konische Erweiterungen an beiden Hülsenenden auf. Die obere und untere Stirnfläche der elastisch deformierbaren Hülse ist am Düsenkörper geführt. Die Stelleinrichtungen zur radialen Deformierung der Hülse sind in der Symmetrieebene angeordnet.

Der Druck der Schmelze beträgt im konischen Einlaufbereich der Hülse ein Mehrfaches des im konischen Auslauf der Hülse herrschenden Schmelzedruckes. Dies hat zur Folge, daß auf die Hülse eine von oben nach unten gerichtete Axialkraft ausgeübt wird, die über die unterseitige Abstützung in den Düsenkörper eingeleitet wird. Zusätzlich entsteht beim Durchfließen des Düsenspaltes durch den Fließwiderstand eine ebenfalls nach unten wirkende Kraft auf die Hülse, die abhängig ist vom Durchsatz, der Ringspaltbreite, der Viskosität, der Temperatur und anderen Faktoren. Die Hülse liegt an ihrer unteren Stirnseite nur mit einer schmalen Ringfläche an der Gleitfläche des Düsenkörpers auf, da einerseits einer Vergrößerung der Wandstärke der Hülse durch die geforderte Deformierbarkeit Grenzen gesetzt sind und ferner die Hülse am unterseitigen Haltering des Düsenkörpers radial nach innen überstehen muß. Der Überstand ist erforderlich, um zu verhindern, daß die Schmelze bei Austritt aus dem Düsenspalt an Umfangsabschnitten des zum Düsenkörper gehörenden Halterings anläuft. Die beschriebenen Zwänge führen dazu, daß die am Düsenkörper abgestützte untere Stirnfläche der Hülse einem großen Preßdruck ausgesetzt ist und bei radialen Bewegungen, die mit der Deformierung der Hülse verbunden sind, erheblichem Verschleiß unterliegen kann. Die Verschleißbeanspruchung ist groß, da die Hülse durch programmgesteuerte Bewegungen der Stelleinrichtungen während der Extrusion der schlauchförmigen Vorformlinge ständigen radialen Bewegungen ausgesetzt ist.

Der Erfindung liegt die Aufgabe zugrunde, einen Strangpreßkopf mit den eingangs beschriebenen Merkmalen so weiter auszubilden, daß weitgehend verschleißfreie Deformationen und Verschiebungen an dem schlauchaustrittsseitigen Ende der Hülse möglich sind.

Die Aufgabe wird gemäß einer ersten Ausführung der erfindungsgemäßen Lehre dadurch gelöst, daß die Hülse vom oberen einlaufseitigen Ende bis zum Düsenaustritt als Zylinder oder als Rohr mit einem an die Zylinderform angeordneten Längsprofil ausgebildet ist, wobei die rohrinnenseitige Unterkante der Hülse den aus der Ringspaltdüse austretenden Schmelzestrom im Austrittsquerschnitt formt. Die Hülse kann rohrförmig mit einem leicht nach innen oder außen gerichteten Konus ausgebildet sein. Der konische Winkel beträgt dabei nur wenige Grad. Insofern liegt ein an die Zylinderform angenähertes Längsprofil vor.

Die Hülse wirkt mit einem konischen Teil der Ringspaltdüse zusammen, wobei je nach Anordnung der elastisch deformierbaren Hülse die konische Fläche am Dorn oder am Düsenkörper ausgebildet ist. Bei einer Deformation der Hülse durch die radial angeschlossenen Stelleinrichtungen ist aufgrund der zylindrischen oder zumindest annähernd zylindrischen Bauform der Hülse gewährleistet, daß die obere Stirnfläche der Hülse planparallel zur Gleitfläche bleibt. Es treten keine Verwerfungen innerhalb der Hülse auf, die Undichtigkeiten zwischen der Hülse und den korrespondierenden Gleitflächen des Düsenkörpers verursachen können. Durch ihre zylindrische oder zumindest annähernd zylindrische Ausbildung ist die Hülse nur geringen Axialkräften ausgesetzt, die sich im wesentlichen aus dem Fließwiderstand des vorbeiströmenden Schmelzestroms ergeben. Die erfindungsgemäß angestrebte Kraftkompensation ist in idealer Weise verwirklicht.

Ein Strangpreßkopf mit einer im wesentlichen zylindrisch ausgebildeten elastisch deformierbaren Hülse zur Beeinflussung der Schmelzekanalgeometrie ist aus DE-A 28 23 999 (Fig. 3) an sich bekannt. An der Oberseite der Hülse liegt ein Ring auf, der durch radiale Stellschrauben lediglich zentriert ist. Der im Schmelzekanal herrschende Preßdruck wird axial auf die Hülse übertragen, so daß sich auch bei dieser Ausführung das eingangs erläuterte technische Problem stellt. Ferner ist im Rahmen der bekannten Maßnahmen die zylindrische Hülse stets innerhalb der Ringspaltdüse mit Abstand zum Düsenaustritt angeordnet. Eine innerhalb der Ringspaltdüse vorgenommene Profilierung des Schmelzestroms baut sich auf dem weiteren Weg des Schmelzestroms wieder ab. Eine zylindrische, elastisch deformierbare Hülse im Inneren des Strangpreßkopfes wird daher nur zur Vorprofilierung des Schmelzestroms verwendet. Die Deformation der zur Vorprofilierung verwendeten Hülse wird durch Stellschrauben fest eingestellt und unterliegt während der Extrusion eines Vorformlings keinen Änderungen. Der Stand der Technik gibt insofern keine Anregung, am Düsenaustritt eine zylindrische oder zumindest annähernd zylindrische Hülse einzusetzen, die von vorzugsweise programmgesteuerten Stelleinrichtungen während des Schlauchaustritts ständig sich ändernden Deformationen ausgesetzt ist und deren Unterkante den aus der Ringspaltdüse austretenden Schmelzestrom im Austrittsquerschnitt formt.

Bei der zuvor beschriebenen erfindungsgemäßen Anordnung ist der austretende Schmelzestrom einer erheblichen Scherbeanspruchung an der Unterkante der elastisch deformierbaren Hülse ausgesetzt. Diese Scherbeanspruchung kann Inhomogenitäten im Schmelzestrom bewirken, die bei bestimmten Kunststoffmaterialien und bei extremen Düsenspaltgeometrien Qualitätsminderungen im blasgeformten Hohlkörper bewirken können. Zur Verbesserung der Glättwirkung und zur Erzielung besserer Blasformergebnisse kann die Unterkante der Hülse gerundet ausgeführt sein oder eine den austretenden Schmelzestrom formende Profilkante, vorzugsweise in Form einer konischen Fasenfläche, aufweisen. Weitere Ausgestaltungen der zylindrischen Hülse sind Gegenstand der Ansprüche 4 und 5.

Wenn sehr hohe Qualitätsanforderungen an die blasgeformten Kunststoffbehälter gestellt werden, wird vorzugsweise eine elastisch deformierbare Hülse verwendet, die zum düsenaustrittsseitigen Ende durch ein konisches Profil an den Verlauf des Schmelzekanals angepaßt ist. Die Hülse wird vorzugsweise im Düsenkörper angeordnet. Gegenstand der Erfindung ist daher auch ein Strangpreßkopf zum Extrusionsblasformen von Kunststoffbehältern mit den Merkmalen der Ansprüche 6 oder 7, die von dem Stand der Technik aus EP 0 885 711 A1 (Fig. 6) ausgehen. Die elastisch deformierbare Hülse ist nicht mehr symmetrisch ausgebildet. Eine düsenaustrittsseitige konische Erweiterung der Hülse kann genutzt werden, um axiale Kräfte, die durch den Druckverlauf im Schmelzekanal sowie den Fließwiderstand auf die Hülse ausgeübt werden, zumindest teilweise zu kompensieren oder sogar eine Umkehrung dieser Axialkräfte zu bewirken. Die Kraftkompensation geschieht dadurch, daß der Hülseninnendurchmesser an der oberen Stirnfläche der Hülse kleiner gewählt wird als im Düsenaustritt. Die resultierende Kompensationskraft ergibt sich aus der projizierten Ringfläche, die durch den Hülseninnendurchmesser am Düsenaustritt und den Hülseninnendurchmesser am Düseneintritt bestimmt ist, multipliziert mit dem am düsenaustrittsseitigen Ende herrschenden Druck im Düsenspalt.

Der Einlaufbereich der Hülse kann als Zylinder oder als Rohr mit einem an die Zylinderform angepaßten Längsprofil ausgebildet sein. Eine weitere Ausführungsform der erfindungsgemäßen Lehre sieht vor, daß die Hülse an beiden Enden konische Erweiterungen aufweist, wobei die konische Erweiterung am Düsenaustritt größer ist als die Erweiterung am oberen einlaufseitigen Ende. Dabei ist als Abstimmungsregel für die Festlegung des Innendurchmessers am oberen einlaufseitigen Ende und für die Festlegung des Hülseninnendurchmessers am Düsenaustritt anzustreben, daß die durch den Schmelzedruck im Einlaufbereich auf die Hülse nach unten wirkende Axialkraft weitgehend, jedoch um mindestens 50 %, durch den am Düsenaustritt herrschenden kleineren Schmelzedruck, der auf die Hülse eine nach oben gerichtete Kraft ausübt, kompensierbar ist. Die Hülse weist zwischen den konischen Erweiterungen zweckmäßig einen zylindrischen Mittelabschnitt auf.

Die zuvor beschriebene Kraftkompensation der durch den Schmelzestrom auf die Hülse ausgeübten Axialkräfte ist in analoger Weise auch möglich, wenn die Hülse am Dorn angeordnet ist. Eine solche Ausführung ist Gegenstand der Patentansprüche 11 und 12.

Bei einer unsymmetrischen Ausbildung der Hülse besteht die Gefahr, daß bei einer radialen Deformierung der Hülse Verwerfungen auftreten. Als Verwerfungen werden wellenförmige Erhebungen und Vertiefungen an der Hülsenoberkante oder Hülsenunterkante verstanden. Solche Verwerfungen bewirken störende Undichtigkeiten zwischen der Hülse und den korrespondierenden Gleitflächen des Düsenkörpers bzw. Dorns. Die erfindungsgemäße Lehre beruht auf der Erkenntnis, daß Verwerfungen vermieden oder zumindest auf ein nicht mehr störendes Maß reduziert werden können, wenn die im Anspruch 6 angegebenen Maßnahmen in Kombination verwirklicht werden. Entsprechendes gilt für den Anspruch 11. Die Kraftangriffspunkte der Stelleinrichtungen liegen bei einer unsymmetrischen Ausbildung der Hülse entsprechend der erfindungsgemäßen Lehre vorzugsweise nicht auf der halben Höhe der Hülse, sind also in Längsrichtung der Hülse außermittig angeordnet. Die geeignete Querschnittsebene für die Kraftangriffspunkte läßt sich anhand orientierender Versuche ermitteln. Die Querschnittsebene für die Kraftangriffspunkte der Stellantriebe wird im Rahmen der erfindungsgemäßen Lehre zweckmäßig so festgelegt, daß an der oberen Stirnfläche der Hülse bei maximaler Hülsendeformation Verwerfungen von maximal 60 μm, vorzugsweise von höchstens 30 μm, in axialer Richtung auftreten.

Wenn die Kraftangriffspunkte der Stelleinrichtungen auf halber Höhe der Hülse festgelegt sind, sind bei einer unsymmetrischen Ausbildung der Hülse Maßnahmen entsprechend Anspruch 7 zu treffen, um stirnseitige Verwerfungen zu vermeiden. Die Hülse ist in diesem Fall mit einem außenseitigen Kragen ausgebildet, der so gestaltet ist, daß die an einer Gleitfläche des Düsenkörpers geführte obere Stirnfläche der Hülse bei einer Deformation der Hülse zumindest annähernd ihre Planparallelität zur Gleitfläche beibehält. Vorzugsweise befindet sich der Kragen an einem Ende der Hülse und bildet die Gleitfläche. Durch orientierende Versuche kann die Gestaltung des an einem Ende vorgesehenen Kragens oder die Gestaltung der an beiden Enden vorgesehenen, aber unterschiedlich ausgebildeten Kragen, so festgelegt werden, daß an der oberen Stirnfläche der Hülse bei maximaler Düsendeformation Verwerfungen von maximal 60 µm, vorzugsweise von höchstens 30 µm, in axialer Richtung auftreten.

Rechnerische Methoden zur Abstimmung der Kraftangriffspunkte bzw. Ausbildung der Hülse sind in den Patentansprüchen 15 und 16 beschrieben. Verwerfungen an der oberen Stirnfläche der Hülse lassen sich vermeiden, wenn die Hülse an mindestens einem Ende einen außenseitigen Kragen als Gleitfläche aufweist, der so gestaltet ist, daß das für das Wandprofil der Hülse ermittelte Flächendeviationsmoment am Flächenschwerpunkt annähernd Null ist, und wenn bei einer solchen Ausführung die Kraftangriffspunkte der Stelleinrichtungen in einer Querschnittsebene angeordnet sind, in der der Flächenschwerpunkt des Wandprofils liegt. Wandprofil meint das Profil der Hülse in einem Längsschnitt. Der Flächenschwerpunkt in einem YZ-Koordinatensystem hat die Koordinaten:

$$Y_S = \frac{1}{A} \int_A ydA$$

$$Z_S = \frac{1}{A} \int_A zdA$$

Das Flächendeviationsmoment

$$I_{yz} = - \int_A yzdA$$

ist ein Flächenmoment zweiter Ordnung, also eine flächengeometrische Größe, deren Wert von der Form der Fläche und deren Lage im Koordinatensystem abhängt. Es wurde ferner festgestellt, daß störende Verwerfungen an der Stirnfläche der Hülse vermieden werden können, wenn bei einem Wandprofil der Hülse, dessen im Flächenschwerpunkt ermitteltes Flächendeviationsmoment von Null wesentlich abweicht, die Kraftangriffspunkte der Stelleinrichtung gegenüber der Querschnittsebene, in der der Flächenschwerpunkt liegt, versetzt angeordnet sind. In der Praxis wird der Kraftangriffspunkt in Richtung auf das Hülsenende, welches den kleineren Innendurchmesser aufweist, verschoben. Auf diese Weise kann die Wirkung eines Flächendeviationsmomentes kompensiert werden.

Im allgemeinen sind die auf die elastisch deformierbare Hülse einwirkenden Stelleinrichtungen in einer horizontalen Ebene angeordnet. Im Rahmen der Erfindung liegt es auch, daß die Stelleinrichtungen unter einer schräg nach oben ausgerichteten Kraftwirkungslinie an die Hülse angeschlossen sind. Bei einer schräg nach oben gerichteten Ausführung wirkt auf die Hülse eine zusätzliche Kompensationskraft, die der durch die Schmelze auf die Hülse ausgeübten, nach unten gerichteten Kraft entgegengerichtet ist.

Bei allen zuvor beschriebenen Ausführungen der Erfindung ergeben sich für die unterseitige Abstützung der elastisch deformierbaren Hülse verschiedene konstruktive Möglichkeiten, die in den Ansprüchen 18 bis 23 beschrieben sind.

Durch die zuvor beschriebenen Maßnahmen gelingt es, die auf die elastisch deformierbare Hülse ausgeübten Axialkräfte zumindest teilweise zu kompensieren, um dadurch den mit radialen Bewegungen der Hülse verbundenen Verschleiß an der die Hülse unterseitig stützenden Gleitfläche zu reduzieren oder sogar die Kraftrichtung umzukehren und den Verschleiß an der unteren Stirnfläche zu verhindern. Wenn die beschriebenen Kompensationsmaßnahmen nicht ausreichen, können an der vom Schmelzekanal abgewandten Mantel-seite der Hülse zusätzliche oder alleinige Maßnahmen zur Kraftkompensation vorgesehen werden. Eine erfindungsgemäße Ausgestaltung sieht vor, daß die Hülse in axialer Richtung an Federn abgestützt ist, die eine durch den Schmelzedruck auf die Hülse ausgeübte Axialkraft kompensieren, wobei die nach oben gerichtete Kraft der vorgespannten Federn auch größer sein kann als die durch den Schmelzestrom auf die Hülse einwirkende, nach unten gerichtete Kraft. Statt Federn können andere gleichwirkende Kraftelemente eingesetzt werden. Diese können sogar in Abhängigkeit des herrschenden Druckes der Schmelze zyklisch gesteuert oder geregelt werden. Gemäß einer anderen Ausführung ist die Hülse an der vom Schmelzekanal abgewandten Mantelseite von einem unter Druck stehenden Fluid beaufschlagt, das eine durch den Druck im Schmelzekanal auf die Hülse ausgeübte Axialkraft kompensiert. Bei dem Fluid kann es sich um ein separates Sperrmedium handeln oder auch um einen Teilstrom der Kunststoffschmelze, die aus dem Schmelzekanal abgeleitet und in geeigneter Weise an der Mantelaußenseite der Hülse vorbeigeführt wird.

Im folgenden wird die Erfindung anhand einer lediglich ein Ausführungsbeispiel darstellenden Zeichnung erläutert. Es zeigen schematisch

Fig. 1          einen Längsschnitt durch eine Ringspaltdüse eines Strangpreßkopfes,

Fig. 2          eine weitere Ausführungsform des Strangpreßkopfes, ebenfalls im Längsschnitt,

Fig. 3          ein Schema für die Festlegung des Kraftangriffspunktes für die Stellantriebe an einer elastisch deformierbaren Hülse mit unsymmetrischem Hülsenprofil,

Fig. 4          die Festlegung des Kraftangriffspunktes für die Stellantriebe bei einem anderen, ebenfalls unsymmetrischen Hülsenprofil,

Fig. 5 bis 15    weitere Ausführungen der erfindungsgemäßen Vorrichtung,

Die in den Figuren dargestellten Vorrichtungen werden zum Extrusionsblasformen von Kunststoffbehältern eingesetzt. Dabei wird ein schlauchförmiger Vorformling aus einer thermoplastischen Kunststoffschmelze aus einem Strangpreßkopf extrudiert und in einer nicht dargestellten Blasform zu einem Kunststoffbehälter aufgeweitet. Der Strangpreßkopf weist eine Ringspaltdüse mit einem Dorn 1, einem ringförmigen Düsenkörper 2 sowie einer elastisch deformierbaren Hülse 3 auf. Die Hülse 3 ist an Gleitflächen 7, 8 des Düsenkörpers 2 oder des Dorns 1, welche die Hülse 3 nach oben und unten abstützen, radial beweglich geführt. Ihr sind Stelleinrichtungen 4 zugeordnet, durch deren Stellbewegungen sie radial verformbar sowie auch radial verschiebbar ist. Die Hülse 3 begrenzt einen Düsenspalt, dessen Spaltbreite durch axiale Stellbewegungen des Dorns 1 und/oder des Düsenkörpers 2 veränderbar ist und dessen Geometrie durch Deformierung der Hülse 3 während der Extrusion eines schlauchförmigen Vorformlings beeinflußbar ist. Die axialen Stellbewegungen des Dorns 1 und/oder des Düsenkörpers 2 sowie die auf die Hülse 3 ausgeübten radialen Stellbewegungen sind programmgesteuert.

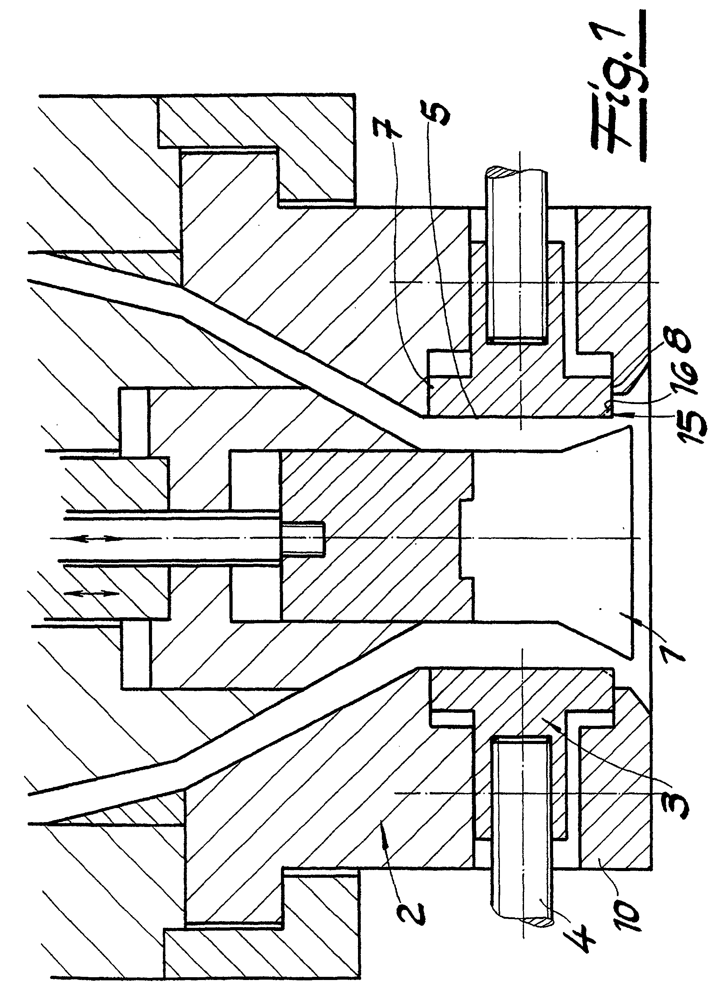

Im Ausführungsbeispiel der Fig. 1 ist die Hülse 3 im Düsenkörper 2 angeordnet. Sie ist vom oberen einlaufseitigen Ende bis zum Düsenaustritt als Zylinder oder als Rohr mit einem an die Zylinderform angenäherten Längsprofil ausgebildet und so angeordnet, daß die rohrinnenseitige Unterkante 15 der Hülse 3 den aus der Ringspaltdüse austretenden Schmelzestrom im Austrittsquerschnitt formt. Zur Verbesserung der Glättung des Schmelzestroms kann die Unterkante 15 der Hülse 3 gerundet ausgeführt sein oder eine den Schmelzestrom formende Profilkante aufweisen. Im Ausführungsbeispiel ist die Profilkante als konische Fasenfläche 16 ausgebildet.

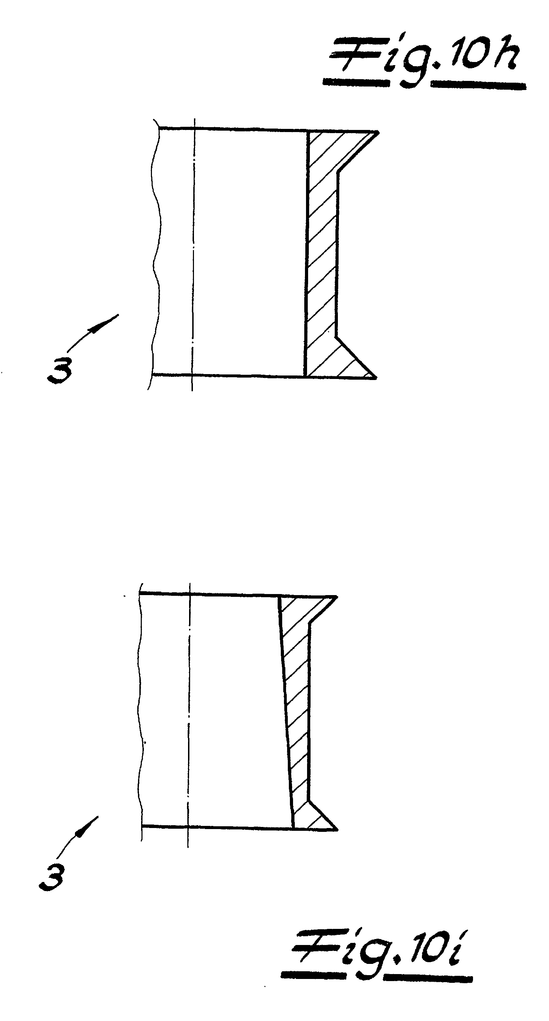

In der Fig. 1 ist die elastisch deformierbare Hülse als Zylinder ausgebildet, der mit der konischen Fläche des Dorns 1 den Düsenaustrittsspalt bildet. Statt eines Zylinders kann die Hülse auch als Rohr mit einem im Längsschnitt konischen Profil ausgebildet sein, wobei der Winkel des Konus jedoch wenige Grad beträgt und insofern ein an die Zylinderform angenähertes Längsprofil vorliegt (Fig. 10a) .An vorzugsweise beiden Enden können die zylindrische oder schwach konische Hülse einen außenseitigen ringförmigen Kragen aufweisen (Fig. 10h, 10i) oder mehrere am Umfang angeordnete Vorsprünge als Gleitflächen aufweisen. Generell können ringförmige Kragen an der Hülse durch mehrere am Umfang angeordnete Vorsprünge ersetzt werden.

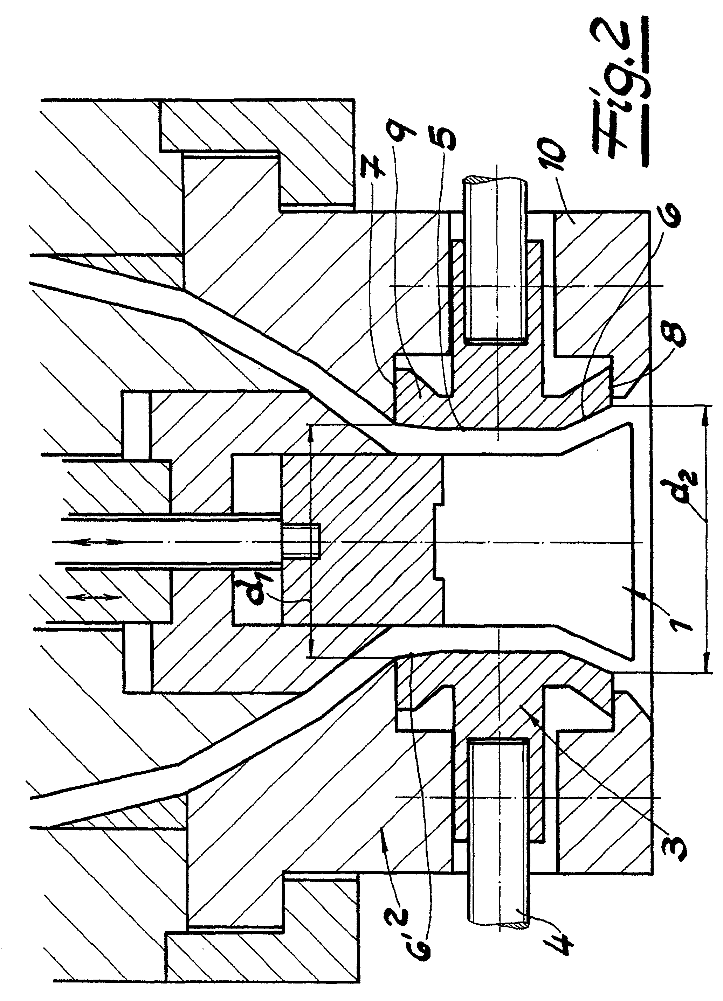

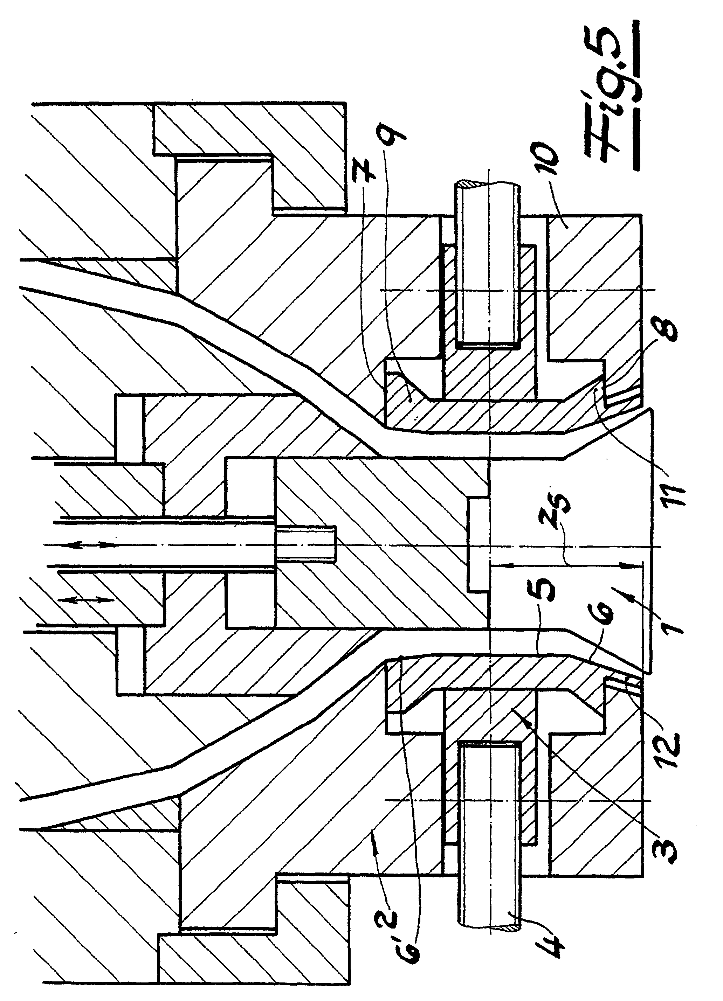

Im Ausführungsbeispiel der Fig. 2 sowie den weiteren Ausführungen gemäß den Fig. 4 bis 8 weist die ebenfalls im Düsenkörper angeordnete Hülse zum düsenaustrittsseitigen Ende eine konische Erweiterung auf und ist der an der oberen Stirnfläche gemessene Innendurchmesser $d_1$ der Hülse 3 kleiner als der Hülseninnendurchmesser $d_2$ am Düsenaustritt.

Der Hülseninnendurchmesser $d_1$ am oberen, einlaufseitigen Ende, das Wandprofil der Hülse und die Höhe $Z_s$ der Kraftangriffspunkte der Stelleinrichtungen 4 sind so aufeinander abgestimmt, daß die an einer Gleitfläche 7 des Düsenkörpers 2 geführte obere Stirnfläche der Hülse 3 bei einer Deformation der Hülse 3 zumindest annähernd ihre Planparallelität zur Gleitfläche 7 beibehält. Die Kraftangriffspunkte der Stelleinrichtungen 4 sind am Umfange der Hülse 3 verteilt in einer Querschnittsebene angeordnet. Die Festlegung der geeigneten Querschnittsebene $Z_s$ , bei der an der oberen Stirnseite der Hülse 3 keine Verwerfungen bei einer radialen Deformation auftreten, ist durch orientierende Versuche festlegbar. Die Festlegung erfolgt so, daß an der oberen Stirnfläche der Hülse 3 bei maximaler Hülsendeformation Verwerfungen von maximal 60 μm, vorzugsweise von 30 μm in axialer Richtung auftreten. Verwerfungen meint hier wellenförmige Erhebungen und Vertiefungen an der oberen Kante der Hülse 3. Das Maß bezieht sich auf die Differenz zwischen den Wellenbergen und Wellentälern.

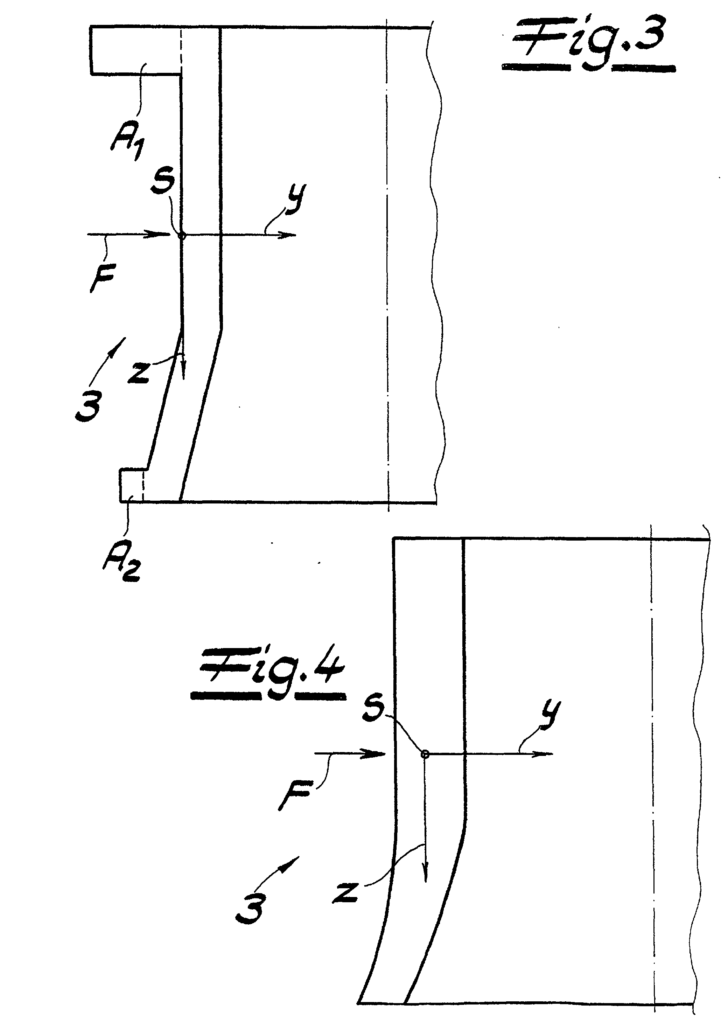

Eine rechnerische Festlegung der Kraftangriffspunkte, die dem Optimum zumindest nahekommt, ist in Fig. 3 dargestellt. Für die Kraftangriffspunkte der Stelleinrichtungen 4 wird diejenige Querschnittsebene gewählt, in der der Flächenschwerpunkt des Wandprofils der Hülse 3 liegt. Die Berechnung der Koordinaten $y_S$, $z_S$ des Flächenschwerpunktes erfolgt nach der Formel

$$Y_S = \frac{1}{A} \int_A y\,dA$$

$$z_S = \frac{1}{A} \int_A z\,dA$$

A: Flächeninhalt des Wandprofils im Längsschnitt

Die Hülse weist an ihren Enden jeweils einen außenseitigen Kragen als Gleitfläche auf, der so gestaltet ist, daß das für das Wandprofil der Hülse ermittelte Flächendeviationsmoment $I_{yz}$ am Flächenschwerpunkt S vernachlässigbar klein ist. Das Flächendeviationsmoment

$$I_{yz} = - \int_A yz\,dA$$

ist ein Flächenmoment zweiter Ordnung dessen Wert von der Form der Fläche und deren Lage im Koordinatensystem abhängt.

Die in Fig. 4 dargestellte Hülse weist im Längschnitt ein Wandprofil auf, dessen im Flächenschwerpunkt ermitteltes Flächendeviationsmoment von Null wesentlich abweicht. Zur Kompensation des Flächendeviationsmomentes sind die Kraftangriffspunkte der Stelleinrichtungen 4 gegenüber der Querschnittsebene, in der der Flächenschwerpunkt S liegt, versetzt angeordnet. Der Abstand ist rechnerisch oder anhand weniger orientierender Versuche festlegbar. Der Kraftangriffspunkt ist in Richtung auf das Hülsenende mit dem kleineren Durchmesser verschoben.

Den Fig. 3 und 4 entnimmt man, daß die Kraftangriffspunkte der Stelleinrichtungen bei einer unsymmetrischen Ausbildung der Hülse meistens nicht auf der halben Höhe der Hülse angeordnet sind; sie sind also in Längsrichtung der Hülse außermittig angeordnet.

Bei der in Fig. 2 dargestellten Ausführung weist die im Düsenkörper 2 angeordnete Hülse 3 einen zylindrischen Mittelabschnitt 5 sowie konische Erweiterungen 6, 6' an beiden Enden auf, wobei die konische Erweiterung 6 zum Düsenaustritt größer ist als die Erweiterung 6' am oberen einlaufseitigen Ende. Der Innendurchmesser $d_1$ der Hülse am oberen, einlaufseitigen Ende ist in Abhängigkeit des im Schmelzekanal in Fließrichtung sich einstellenden Druckprofils auf den Hülseninnendurchmesser $d_2$ am Düsenaustritt zweckmäßig so abgestimmt, daß die durch den Schmelzedruck im Einlaufbereich auf die Hülse 3 nach unten wirkende Axialkraft weitgehend, jedoch um mindestens 50 %, durch den am Düsenaustritt herrschenden kleineren Schmelzedruck, der auf die Hülse 3 eine nach oben gerichtete Kraft ausübt, kompensierbar ist.

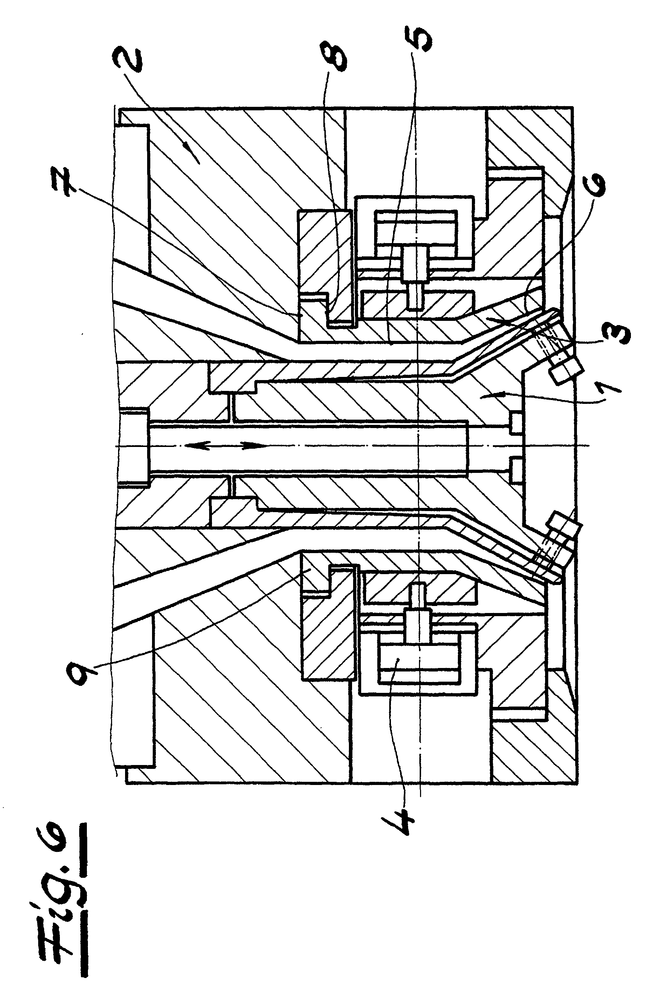

Bei der in Fig. 2 dargestellten Ausführung liegt die Hülse 3 an ihrer oberen und unteren Stirnfläche an Gleitflächen 7, 8 des Düsenkörpers 2 radial beweglich an. Für die unterseitige Abstützung der Hülse 3 bestehen weitere konstruktive Möglichkeiten, die in den Fig. 5 bis 8 dargestellt sind. Bei den dort dargestellten Ausführungen ist die Hülse 3 ohne untere stirnseitige Abstützung am Austritt der Ringspaltdüse angeordnet. Sie weist eine Stützfläche auf, die mit Abstand vom unteren Hülsenende am Umfang der Hülse 3 angeordnet ist und am Düsenkörper 2 bzw. einem mit dem Düsenkörper 2 fest verbundenen Haltering 10 radial beweglich aufliegt.

Im Ausführungsbeispiel der Fig. 5 weist die Hülse 3 unterhalb der Querschnittsebene, in der die Stelleinrichtungen angeordnet sind, einen Stützkragen 11 auf, der auf einem Haltering 10 radial beweglich aufliegt. Unterhalb des Stützkragens 11 ist eine den Schmelzekanal begrenzende dünnwandige Schürze 12 angeformt.

Im Ausführungsbeispiel der Fig. 6 weist die Hülse 3 an ihrem oberen Ende einen Kragen 9 auf, der zwischen Gleitflächen 7, 8 radial beweglich gehalten ist.

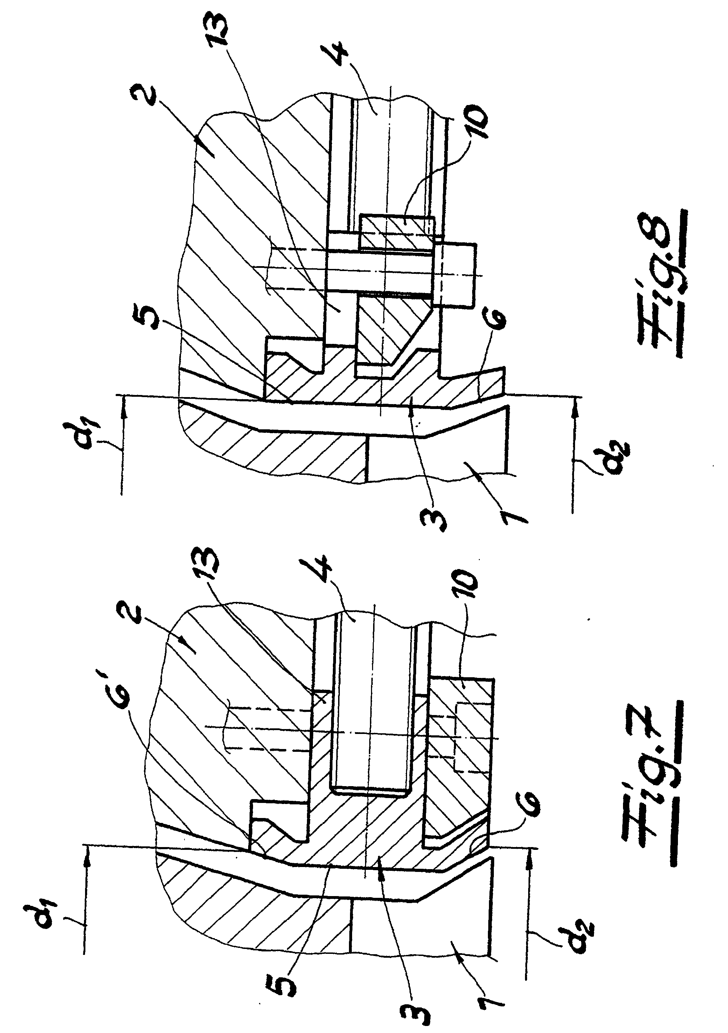

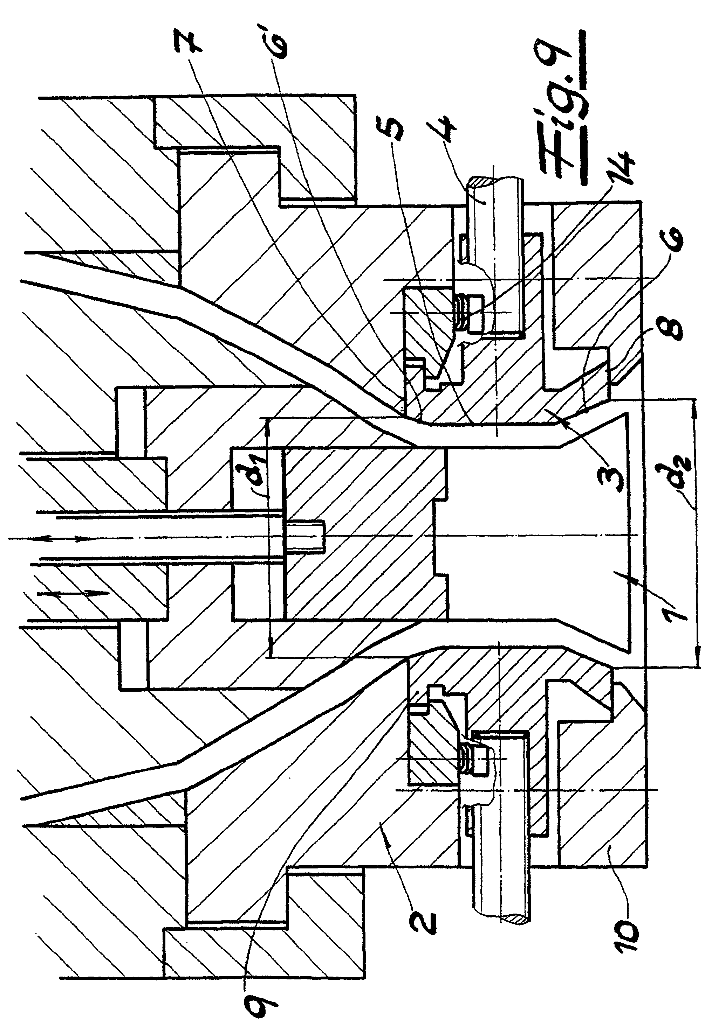

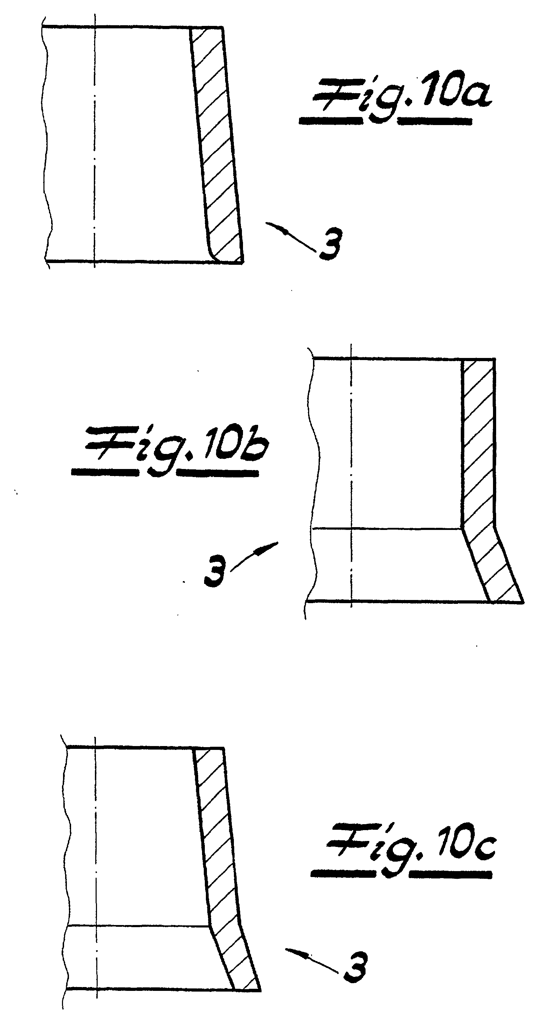

Bei den in den Fig. 7 und 8 dargestellten Ausführungen ist die Hülse 3 mit umfangsseitigen Nocken 13 ausgerüstet, die radial beweglich auf einem Haltering 10 aufliegen und an die Stelleinrichtungen 4 angekuppelt sind. Unterhalb der Nocken kann die Hülse eine Hinterschneidung aufweisen, die eine ringförmige, an die Unterseite der Nocken 13 stufenfrei anschließende Stützfläche bilden. Ferner kann die Hülse in Umfangsabschnitten zwischen den Nocken 13 eine ringförmige Hinterschneidung besitzen, in die den Haltering 10 bildende Ringsegmente zur Abstützung der Hülse 3 mit radialem Spiel eingreifen (Fig. 8).

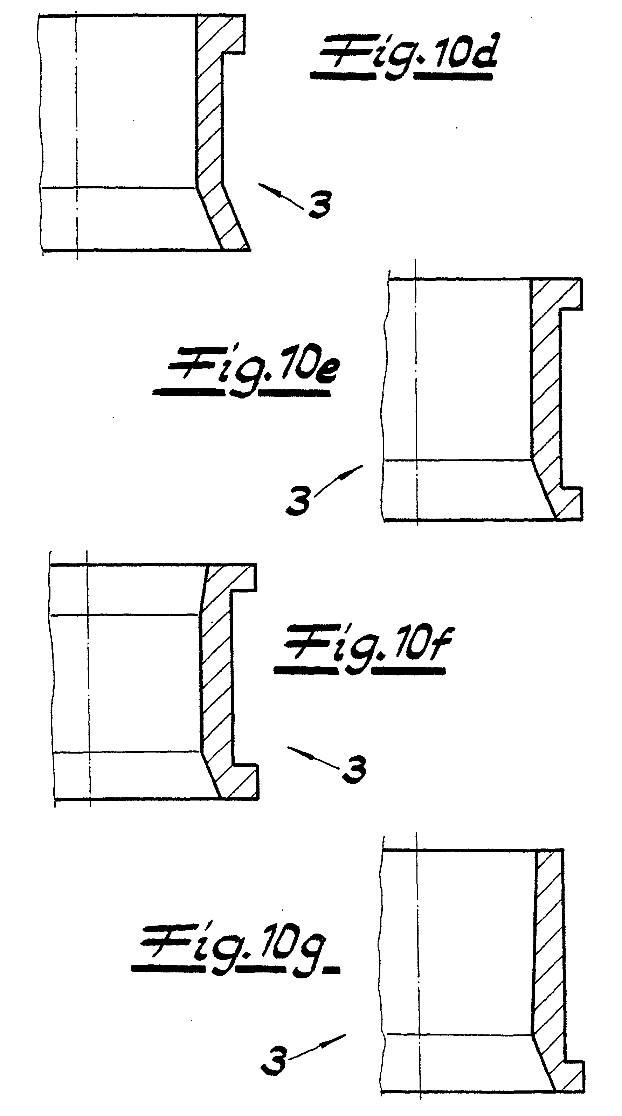

Im Ausführungsbeispiel der Fig. 9 ist an der Mantelaußenseite der im Düsenkörper 2 angeordneten elastisch deformierbaren Hülse 3 eine Einrichtung zur zusätzlichen Kraftkompensation vorgesehen. Die Hülse 3 ist an ihrer Mantelaußenseite auf Federn 14 abgestützt, die eine durch den Schmelzedruck auf die Hülse 3 ausgeübte Axialkraft kompensieren.

Die Fig. 10b bis 10g zeigen weitere Ausführungsbeispiele für die im Rahmen der erfindungsgemäßen Lehre einsetzbare elastisch deformierbare Hülse, und zwar jeweils mit einer düsenaustrittsseitigen konischen Erweiterung. Gemäß Fig. 10b ist der Einlaufbereich der Hülse als Zylinder ausgebildet. Im Ausführungsbeispiel der Fig. 10c besteht der Einlaufbereich aus einem Rohr mit einem an die Zylinderform angenäherten Längsprofil. Das Rohr ist mit einer schwachen konischen Erweiterung ausgebildet, die sich von der oberen Stirnkante der Hülse bis zur konischen Erweiterung erstreckt.

Im Ausführungsbeispiel der Fig. 10d ist dargestellt, daß die Hülse an ihrem einlaufseitigen Ende mit einem Kragen ausgebildet ist, dessen Außendurchmesser größer ist als der unterseitig anschließende, im wesentlichen zylindrische Mantelabschnitt. Zusätzlich kann auch am düsenaustrittsseitigen Ende ein Kragen angeformt sein (Fig. 10e).

In den Ausführungsbeispielen 10f und 10g weist die Hülse an beiden Enden konische Erweiterungen auf, wobei die konische Erweiterung am Düsenaustritt stets größer ist als die Erweiterung am oberen einlaufseitigen Ende. Dabei kann die Hülse, wie in Fig. 10f dargestellt, einen zylindrischen Mittelabschnitt zwischen den konischen Erweiterungen aufweisen. Im Rahmen der Erfindung liegt es auch, daß die einlaufseitige konische Erweiterung sich bis zur düsenaustrittsseitigen konischen Erweiterung erstreckt (Fig. 10g).

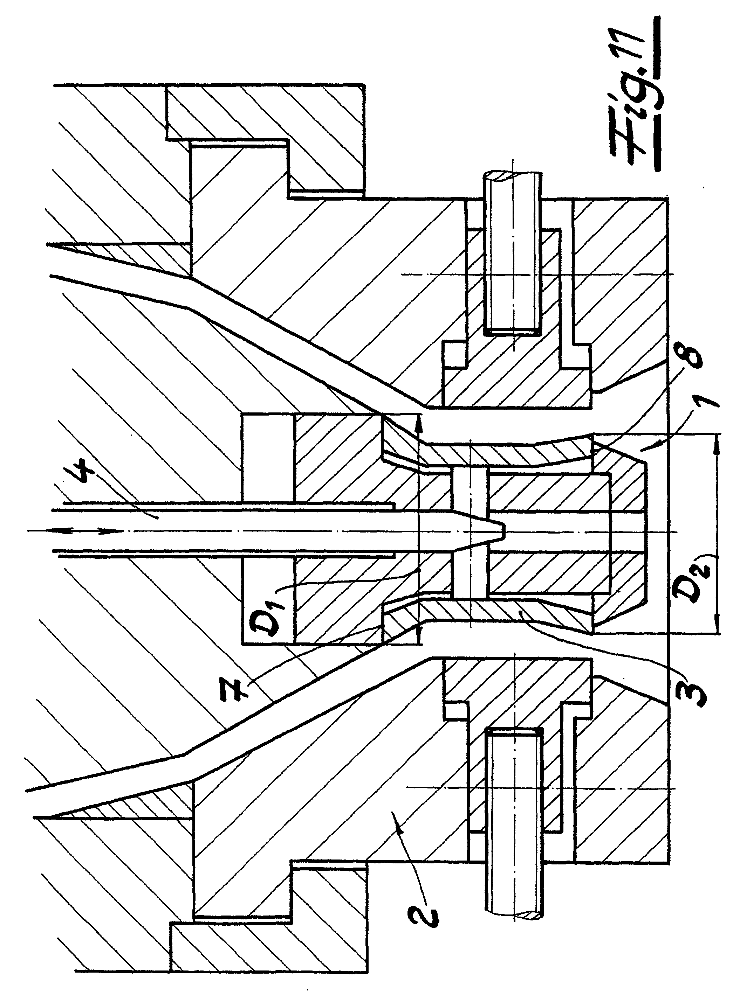

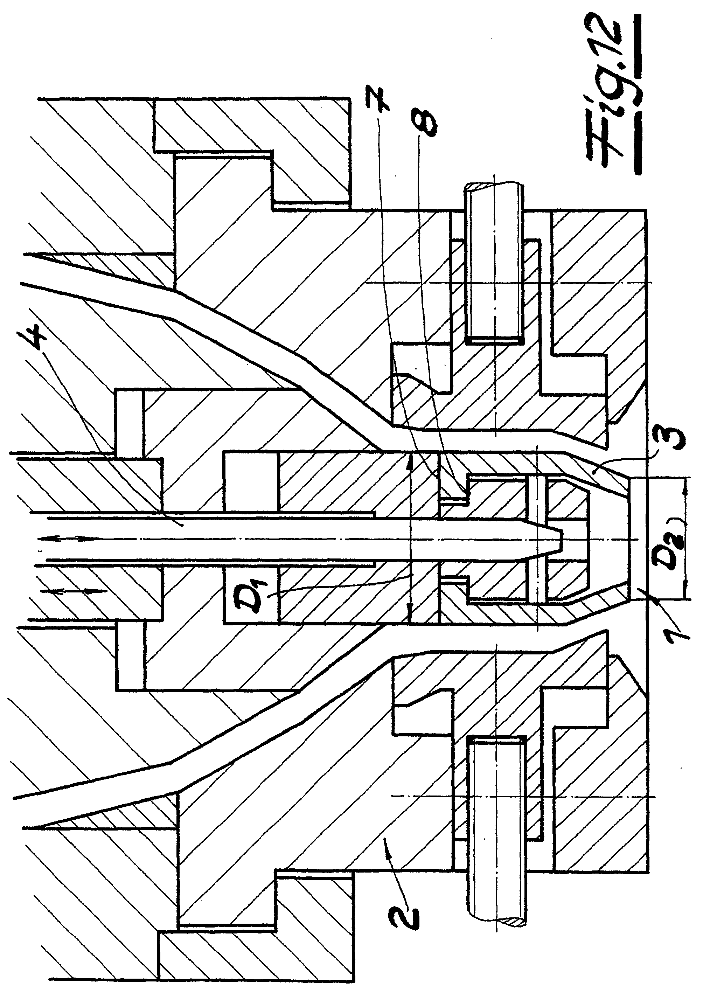

Die Fig. 11 bis 14 zeigen Ausführungsbeispiele, bei denen eine am Dorn 1 angeordnete Hülse 3 erfindungsgemäß so ausgebildet ist, daß weitgehend verschleißfreie Deformationen und Verschiebungen der Hülse 3 möglich sind. Die am Dorn 1 angeordnete Hülse 3 weist zum oberen einlaufseitigen Ende eine konische Erweiterung auf (Fig. 11) oder ist zum düsenaustrittsseitigen Ende mit einer konischen Verjüngung ausgebildet (Fig. 12). Stets ist dabei der an der oberen Stirnfläche gemessene Außendurchmesser $D_1$ der Hülse größer als der Hülsenaußendurchmesser $D_2$ am Düsenaustritt.

Bei der in Fig. 13 dargestellten Ausführung ist die am Dorn 1 angeordnete Hülse 3 zylindrisch ausgebildet und weist lediglich zum oberen einlaufseitigen Ende einen sich konisch erweiternden Kragen auf. Der auf die konische Fläche einwirkende Preßdruck überträgt auf die Hülse 3 eine nach oben gerichtete Kompensationskraft, welche die den Ring unterseitig stützende schmale Ringfläche entlastet.

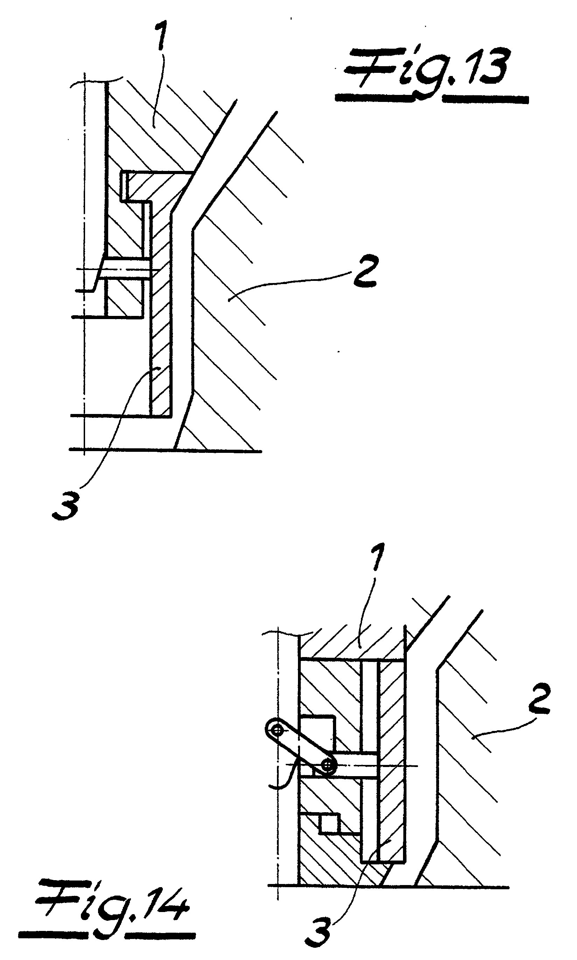

Die Verstellung der Hülse 3 kann durch Druckstößel erfolgen, wobei sich die Hülse aufgrund ihrer Elastizität zurück verformt, wenn die Druckstößel zurück bewegt werden. Die Fig. 14 zeigt, daß auch eine gelenkige Verbindung zwischen dem Stellmittel und der Hülse 3 vorgesehen sein kann.

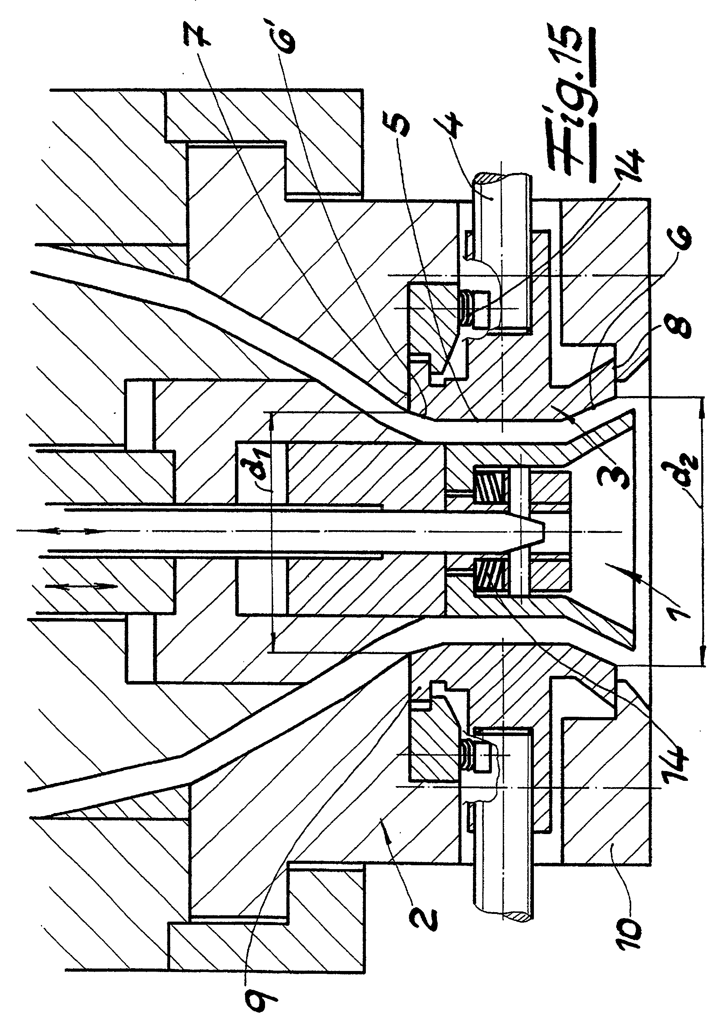

Im Ausführungsbeispiel der Fig. 15 ist sowohl im Düsenkörper 2 als auch am Dorn 1 eine elastisch deformierbare Hülse 3 angeordnet. Die im Düsenkörper 2 angeordnete Hülse weist ein erfindungsgemäßes Profil auf, durch welches axiale Kräfte, die durch den Druckverlauf im Schmelzekanal sowie den Fließwiderstand auf die Hülse ausgeübt werden, teilweise kompensiert werden. Zur weitergehenden Kraftkompensation ist die Hülse in axialer Richtung an Federn 14 abgestützt. Die am Dorn 1 angeordnete Hülse weist ein dem Stand der Technik entsprechendes Profil auf. Durch die im Schmelzekanal herrschenden Druckdifferenzen und den Fließwiderstand werden auf die am Dorn 1 angeordnete Hülse erhebliche Kräfte ausgeübt. Die Kompensation dieser Kräfte erfolgt durch Federn 14, welche die am Dorn 1 angeordnete Hülse in axialer Richtung stützen.

Alle zuvor beschriebenen Ausführungsbeispiele können beliebig miteinander kombiniert werden.

Beispiele:

1. Die in Fig. 3 dargestellte Hülse weist folgende Werte auf:

| | |
|---|---|
| Länge | 60,0 mm |
| Wandstärke der Hülse | 5,0 mm |
| Querschnittsfläche A1 des oberen Kragens | 70,7 mm$^2$ |

(fortgesetzt)

| Querschnittsfläche A2 des unteren Kragens | 12,0 mm$^2$ |
|---|---|
| Abstand der Kraftangriffspunkte, gemessen von der unteren Hülsenkante | 34,2 mm |
| Flächendeviationsmoment $I_{yz}$ | -13,7 mm$^4$ |
| Flächenträgheitsmoment $I_y$ | 161.405,7 mm$^4$ |
| Flächenträgheitsmoment $I_z$ | 5.993,1 mm$^4$ |

2. Die in Fig. 4 dargestellte Hülse weist eine Länge von 60,0 mm sowie im zylindrischen Abschnitt eine Wandstärke von 9,0 mm auf. Für das Flächendeviationsmoment sowie die Trägheitsmomente ergeben sich folgende Werte:

| Flächendeviationsmoment $I_{yz}$ | -10.408,9 mm$^4$ |
|---|---|
| Flächenträgheitsmoment $I_y$ | 138.497,1 mm$^4$ |
| Flächenträgheitsmoment $I_z$ | 4.196,8 mm$^4$ |

Der Kraftangriffspunkt der Stellantriebe liegt oberhalb der Querschnittsebene, in der sich der Flächenschwerpunkt befindet.

**Patentansprüche**

1. Strangpreßkopf zum Extrusionsblasformen von Kunststoffbehältern mit

   einer Ringspaltdüse, die einen Dorn (1) und einen ringförmigen Düsenkörper (2) aufweist,

   einer elastisch deformierbaren Hülse (3) und

   Stelleinrichtungen (4) zur radialen Deformierung der elastischen Hülse (3),

   wobei die am düsenaustrittsseitigen Ende angeordnete Hülse (3) einen Düsenspalt begrenzt, dessen Spaltbreite durch axiale Stellbewegungen des Dorns (1) und/oder des Düsenkörpers (2) veränderbar ist und dessen Geometrie durch Deformierung der Hülse (3) während der Extrusion eines schlauchförmigen Vorformlings beeinflußbar ist, und wobei die Hülse (3) an Gleitflächen (7, 8), welche die Hülse (3) nach oben und unten abstützen, radial beweglich geführt ist, **dadurch gekennzeichnet,**
   **daß** die Hülse (3) vom oberen einlaufseitigen Ende bis zum Düsenaustritt als Zylinder oder als Rohr mit einem an die Zylinderform angenäherten Längsprofil ausgebildet ist, wobei die rohrinnenseitige Unterkante (15) der Hülse (3) den aus der Ringspaltdüse austretenden Schmelzestrom im Austrittsquerschnitt formt.

2. Strangpreßkopf nach Anspruch 1, **dadurch gekennzeichnet, daß** die Unterkante (15) der Hülse (3) gerundet ist oder eine den austretenden Schmelzestrom formende Profilkante (16) aufweist.

3. Strangpreßkopf nach Anspruch 2, **dadurch gekennzeichnet, daß** die Profilkante (16) als konische Fasenfläche ausgebildet ist.

4. Strangpreßkopf nach einem der Ansprüche 1 bis 3, **dadurch gekennzeichnet, daß** die Hülse (3) an mindestens einem Ende einen außenseitigen, ringförmigen Kragen als Gleitfläche aufweist.

5. Strangpreßkopf nach einem der Ansprüche 1 bis 3, **dadurch gekennzeichnet, daß** die Hülse (3) an mindestens einem Ende mehrere am Außenumfang angeordnete Vorsprünge als Gleitfläche aufweist.

6. Strangpreßkopf zum Extrusionsblasformen von Kunststoffbehältern mit

   einer Ringspaltdüse, die einen Dorn (1) und einen ringförmigen Düsenkörper (2) aufweist,

   einer elastisch deformierbaren Hülse (3) und

   Stelleinrichtungen (4) zur radialen Deformierung der elastischen Hülse (3),

   wobei die am düsenaustrittsseitigen Ende angeordnete Hülse (3) einen Düsenspalt begrenzt, dessen Spaltbreite durch axiale Stellbewegungen des Dorns (1) und/oder des Düsenkörpers (2) veränderbar ist und dessen Geometrie durch Deformierung der Hülse (3) während der Extrusion eines schlauchförmigen Vorformlings beeinflußbar ist, wobei die Hülse (3) an Gleitflächen (7, 8), welche die Hülse (3) nach oben und unten abstützen, radial beweglich geführt ist, und wobei die im Düsenkörper angeordnete Hülse (3) zum düsenaustrittsseitigen Ende eine konische Erweiterung aufweist sowie der an der oberen Stirnfläche gemessene Innendurchmesser ($d_1$) der Hülse (3) kleiner ist als der Hülseninnendurchmesser ($d_2$) am Düsenaustritt,
   **dadurch gekennzeichnet,**
   **daß** das Wandprofil der Hülse (3) und die Höhe der in Längsrichtung der Hülse außermittigen Kraftangriffspunkte der Stelleinrichtungen (4) entlang der Hülse (3) so aufeinander abgestimmt sind, daß die an einer Gleitfläche (7) des Düsenkörpers (2) geführte obere Stirnfläche der Hülse (3) bei einer Deformation der Hülse (3) zumindest annähernd ihre Planparallelität zur Gleitfläche beibehält.

7. Strangpreßkopf zum Extrusionsblasformen von Kunststoffbehältern mit

   einer Ringspaltdüse, die einen Dorn (1) und einen ringförmigen Düsenkörper (2) aufweist,

   einer elastisch deformierbaren Hülse (3) und

   Stelleinrichtungen (4) zur radialen Deformierung der elastischen Hülse (3),

   wobei die am düsenaustrittsseitigen Ende angeordnete Hülse (3) einen Düsenspalt begrenzt, dessen Spaltbreite durch axiale Stellbewegungen des Dorns (1) und/oder des Düsenkörpers (2) veränderbar ist und dessen Geometrie durch Deformierung der Hülse (3) während der Extrusion eines schlauchförmigen Vorformlings beeinflußbar ist, wobei die Hülse (3) an Gleitflächen (7, 8), welche die Hülse (3) nach oben und unten abstützen, radial beweglich geführt ist und wobei die im Düsenkörper angeordnete Hülse (3) zum düsenaustrittsseitigen Ende eine konische Erweiterung aufweist sowie der an der oberen Stirnfläche gemessene Innendurchmesser ($d_1$) der Hülse (3) kleiner ist als der Hülseninnendurchmesser ($d_2$) am Düsenaustritt,
   **dadurch gekennzeichnet,**
   **daß** die Kraftangriffspunkte der Stelleinrichtungen (4) auf halber Höhe der Hülse (3) festgelegt sind und
   **daß** die Hülse (3) an zumindest einem Ende mit einem außenseitigen Kragen ausgebildet ist, der so gestaltet ist, daß die an einer Gleitfläche (7) des Düsenkörpers (2) geführte obere Stirnfläche der Hülse (3) bei einer Deformation der Hülse (3) zumindest annähernd ihre Planparallelität zur Gleitfläche beibehält.

8. Strangpreßkopf nach Anspruch 6 oder 7, **dadurch gekennzeichnet, daß** der Einlaufbereich der Hülse (3) als Zylinder oder als Rohr mit einem an die Zylinderform angepaßten Längsprofil ausgebildet ist.

9. Strangpreßkopf nach Anspruch 6 oder 7, **dadurch gekennzeichnet, daß** die Hülse (3) an beiden Enden konische Erweiterungen aufweist, wobei die konische Erweiterung am Düsenaustritt größer ist als die Erweiterung am oberen einlaufseitigen Ende.

10. Strangpreßkopf nach Anspruch 9, **dadurch gekennzeichnet, daß** die Hülse (3) einen zylindrischen Mittelabschnitt (5) zwischen den konischen Erweiterungen (6, 6') aufweist.

11. Strangpreßkopf zum Extrusionsblasformen von Kunststoffbehältern mit

    einer Ringspaltdüse, die einen Dorn (1) und einen ringförmigen Düsenkörper (2) aufweist,

einer elastisch deformierbaren Hülse (3) und

Stelleinrichtungen (4) zur radialen Deformierung der elastischen Hülse (3),

wobei die am düsenaustrittsseitigen Ende angeordnete Hülse (3) einen Düsenspalt begrenzt, dessen Spaltbreite durch axiale Stellbewegungen des Dorns (1) und/oder des Düsenkörpers (2) veränderbar ist und dessen Geometrie durch Deformierung der Hülse (3) während der Extrusion eines schlauchförmigen Vorformlings beeinflußbar ist, und wobei die Hülse (3) an Gleitflächen (7, 8), welche die Hülse (3) nach oben und unten abstützen, radial beweglich ist, **dadurch gekennzeichnet,**

**daß** die am Dorn (1) angeordnete Hülse (3) zum oberen einlaufseitigen Ende eine konische Erweiterung und/oder zum düsenaustrittsseitigen Ende eine konische Verjüngung aufweist und der an der oberen Stirnfläche gemessene Außendurchmesser ($D_1$) der Hülse (3) größer ist als der Hülsenaußendurchmesser ($D_2$) am Düsenaustritt und

**daß** das Wandprofil der Hülse (3) und die Höhe der Kraftangriffspunkte der Stelleinrichtungen (4) entlang der Hülse (3) so aufeinander abgestimmt sind, daß die an einer Gleitfläche (7) des Düsenkörpers (2) geführte obere Stirnfläche der Hülse (3) bei einer Deformation der Hülse (3) zumindest annähernd ihrer Planparallelität zur Gleitfläche beibehält.

**12.** Strangpreßkopf nach Anspruch 11, **dadurch gekennzeichnet, daß** die am Dorn (1) angeordnete Hülse (3) zylindrisch ausgebildet ist und lediglich zum oberen einlaufseitigen Ende einen sich konisch erweiternden Kragen (9) aufweist.

**13.** Strangpreßkopf nach einem der Ansprüche 1 bis 12, **dadurch gekennzeichnet, daß** der Durchmesser ($d_1$, $D_1$) der Hülse (3) am oberen, einlaufseitigen Ende in Abhängigkeit des im Schmelzekanal in Fließrichtung sich einstellenden Druckprofils auf den Hülseninnendurchmesser ($d_2$, $D_2$) am Düsenaustritt so abgestimmt ist, daß die durch den Schmelzedruck im Einlaufbereich auf die Hülse (3) nach unten wirkende Axialkraft weitgehend, jedoch um mindestens 50 %, durch den am Düsenaustritt herrschenden, kleineren Schmelzedruck, der auf die Hülse (3) eine nach oben gerichtete Kraft ausübt, kompensierbar ist.

**14.** Strangpreßkopf nach einem der Ansprüche 1 bis 13, **dadurch gekennzeichnet, daß** die Kraftangriffspunkte der Stelleinrichtungen (4) in einer Querschnittsebene angeordnet sind, die so festgelegt ist, daß an der oberen Stirnfläche der Hülse (3) bei maximaler Hülsendeformation Verwerfungen von höchstens 60 μm in axialer Richtung auftreten.

**15.** Strangpreßkopf nach einem der Ansprüche 1 bis 14, **dadurch gekennzeichnet, daß** die Hülse (3) mindestens einen außenseitigen Kragen aufweist, der so gestaltet ist, daß das für das Wandprofil der Hülse ermittelte Flächendeviationsmoment am Flächenschwerpunkt annähernd Null ist, und daß die Kraftangriffspunkte der Stelleinrichtungen (4) in einer Querschnittsebene angeordnet sind, in der der im Längsschnitt ermittelte Flächenschwerpunkt des Wandprofils liegt.

**16.** Strangpreßkopf nach einem der Ansprüche 1 bis 14, **dadurch gekennzeichnet , daß** bei einem Wandprofil der Hülse (3), dessen im Flächenschwerpunkt ermitteltes Flächendeviationsmoment von Null wesentlich abweicht, die Kraftangriffspunkte der Stelleinrichtungen zur Kompensation des Flächendeviationsmomentes gegenüber der Querschnittsebene, in der der Flächenschwerpunkt des im Längsschnitt betrachteten Wandprofils liegt, versetzt angeordnet sind.

**17.** Strangpreßkopf nach einem der Ansprüche 1 bis 16, **dadurch gekennzeichnet, daß** die Stelleinrichtungen (4) unter einer schräg nach oben ausgerichteten Kraftwirkungslinie an die Hülse (3) angeschlossen sind.

**18.** Strangpreßkopf nach einem der Ansprüche 1 bis 17, **dadurch gekennzeichnet, daß** die Hülse (3) an ihrer oberen und unteren Stirnfläche an Gleitflächen (7, 8) des Düsenkörpers (2) radial beweglich anliegt.

**19.** Strangpreßkopf nach einem der Ansprüche 1 bis 18, **dadurch gekennzeichnet, daß** die Hülse (3) ohne untere stirnseitige Abstützung am Austritt der Ringspaltdüse angeordnet ist und eine Stützfläche für die radial bewegliche Abstützung aufweist, die mit Abstand vom unteren Hülsenende am Umfang der Hülse (3) angeordnet ist.

**20.** Strangpreßkopf nach Anspruch 19, **dadurch gekennzeichnet, daß** die Hülse (3) an ihrem oberen Ende einen Kragen (9) aufweist, der zwischen Gleitflächen (7, 8) radial beweglich gehalten ist.

21. Strangpreßkopf nach Anspruch 19, **dadurch gekennzeichnet, daß** die Hülse (3) unterhalb der Querschnittsebene, in der die Stelleinrichtungen angreifen, einen Stützkragen (11) aufweist, der auf einem Haltering (10) radial beweglich aufliegt, und daß unterhalb des Stützkragens (11) eine den Schmelzekanal begrenzende dünnwandige Schürze (12) angeformt ist.

22. Strangpreßkopf nach Anspruch 19, **dadurch gekennzeichnet, daß** die Hülse (3) umfangsseitige Nocken (13) aufweist, die radial beweglich auf einem Haltering (10) aufliegen und an die Stelleinrichtungen (4) angekuppelt sind.

23. Strangpreßkopf nach Anspruch 22, **dadurch gekennzeichnet, daß** die Hülse (3) unterhalb der Nocken (13) eine Hinterschneidung aufweist, die eine ringförmige, an die Unterseite der Nocken (13) stufenfrei anschließende Stützfläche bilden.

24. Strangpreßkopf nach einem der Ansprüche 1 bis 23, **dadurch gekennzeichnet, daß** die Hülse (3) an ihrer Mantelaußenseite von einem unter Druck stehenden Fluid beaufschlagt ist, das eine durch den Druck im Schmelzekanal auf die Hülse ausgeübte Axialkraft kompensiert.

25. Strangpreßkopf zum Extrusionsblasformen von Kunststoffbehältern mit

   einer Ringspaltdüse, die einen Dorn (1) und einen ringförmigen Düsenkörper (2) aufweist,

   einer elastisch deformierbaren Hülse (3) und

   Stelleinrichtungen (4) zur radialen Deformierung der elastischen Hülse (3),

   wobei die am düsenaustrittsseitigen Ende angeordnete Hülse (3) einen Düsenspalt begrenzt, dessen Spaltbreite durch axiale Stellbewegungen des Dorns (1) und/oder des Düsenkörpers (2) veränderbar ist und dessen Geometrie durch Deformierung der Hülse (3) während der Extrusion eines schlauchförmigen Vorformlings beeinflußbar ist, und wobei die Hülse (3) an Gleitflächen (7, 8), welche die Hülse (3) nach oben und unten abstützen, radial beweglich geführt ist, **dadurch gekennzeichnet, daß** die Hülse (3) in axialer Richtung an Federn (14) oder gleichwirkenden Kraftelementen abgestützt ist, die eine durch den Schmelzedruck auf die Hülse (3) ausgeübte Axialkraft kompensieren.

26. Strangpresskopf nach Anspruch 25, **dadurch gekennzeichnet, dass** die Kraftelemente in Abhängigkeit des herrschenden Drucks der Schmelze zyklisch steuer- oder regelbar sind.

## Claims

1. An extruding head for extrusion blow-molding plastic containers, comprising

   an annular die that contains an arbor (1) and an annular die body (2),

   an elastically deformable sleeve (3), and

   adjusting devices (4) for radially deforming the elastic sleeve (3),

   wherein the sleeve (3) that is arranged at the end on the die outlet side limits a die gap, the gap width of which can be varied by axially adjusting the arbor (1) and/or the die body (2) and the geometry of which can be influenced during the extrusion of a tubular preform by deforming the sleeve (3), and wherein the sleeve (3) is guided in a radially movable fashion on sliding surfaces (7, 8) that contact the top and the bottom of the sleeve (3), **characterized by** the fact that the sleeve (3) is realized in the form of a cylinder or a tube with a longitudinal profile that approximately has a cylindrical shape from the upper end on the inlet side to the die outlet, wherein the lower edge (15) of the sleeve (3) on the inner side of the tube molds the flow of the molten mass that emerges from the annular die in the outlet cross section.

2. The extruding head according to Claim 1, **characterized by** the fact that the lower edge (15) of the sleeve (3) is rounded or provided with a profiled edge (16) that molds the emerging flow of the molten mass.

3.  The extruding head according to Claim 2, **characterized by** the fact that the profiled edge (16) is realized in the form of a conical chamfer surface.

4.  The extruding head according to one of Claims 1-3, **characterized by** the fact that at least one end of the sleeve (3) contains an outer annular collar that serves as a sliding surface.

5.  The extruding head according to one of Claims 1-3, **characterized by** the fact that at least one end of the sleeve (3) contains several projections that are arranged on the outer circumference and serve as sliding surfaces.

6.  The extruding head for extrusion blow-molding plastic containers, comprising

    an annular die that contains an arbor (1) and an annular die body (2),

    an elastically deformable sleeve (3), and

    adjusting devices (4) for radially deforming the elastic sleeve (3),

    wherein the sleeve (3) that is arranged at the end on the die outlet side limits a die gap, the gap width of which can be varied by axially adjusting the arbor (1) and/or the die body (2) and the geometry of which can be influenced during the extrusion of a tubular preform by deforming the sleeve (3), wherein the sleeve (3) is guided in a radially movable fashion on sliding surfaces (7, 8) that contact the top and the bottom of the sleeve (3), wherein the sleeve (3) that is arranged in the die body contains a conical widening toward the end on the die outlet side, and wherein the inside diameter ($d_1$) of the sleeve (3) measured on the upper end face is smaller than the inside diameter ($d_2$) of the sleeve at the die outlet,
    **characterized by** the fact
    that the wall profile of the sleeve (3) and the height of the points of application of the forces generated by the adjusting devices (4) which are arranged eccentric referred to the longitudinal direction of the sleeve are adapted to one another along the sleeve (3) in such a way that the upper end face of the sleeve (3) which is guided on a sliding surface (7) of the die body (2) at least approximately maintains its plane-parallel alignment referred to the sliding surface during a deformation of the sleeve (3).

7.  The extruding head for extrusion blow-molding plastic containers, comprising

    an annular die that contains an arbor (1) and an annular die body (2),

    an elastically deformable sleeve (3), and

    adjusting devices (4) for radially deforming the elastic sleeve (3),

    wherein the sleeve (3) that is arranged at the end on the die outlet side limits a die gap, the gap width of which can be varied by axially adjusting the arbor (1) and/or the die body (2) and the geometry of which can be influenced during the extrusion of a tubular preform by deforming the sleeve (3), wherein the sleeve (3) is guided in a radially movable fashion on sliding surfaces (7, 8) that contact the top and the bottom of the sleeve (3), wherein the sleeve (3) that is arranged in the die body contains a conical widening toward the end on the die outlet side, and wherein the inside diameter ($d_1$) of the sleeve (3) measured on the upper end face is smaller than the inside diameter ($d_2$) of the sleeve at the die outlet,
    **characterized by** the fact
    the points of application of the forces generated by the adjusting devices (4) are located at half the height of the sleeve (3), and by the fact
    that at least one end of the sleeve (3) is realized with an outer collar that is designed in such a way that the upper end face of the sleeve (3) which is guided on a sliding surface (7) of the die body (2) at least approximately maintains its plane-parallel alignment referred to the sliding surface during a deformation of the sleeve (3).

8.  The extruding head according to Claim 6 or 7, **characterized by** the fact that the inlet region of the sleeve (3) is realized in the form of a cylinder or in the form of a tube with a longitudinal profile that is adapted to the cylindrical shape.

9.  The extruding head according to Claim 6 or 7, **characterized by** the fact that both ends of the sleeve (3) contain conical widenings, wherein the conical widening at the die outlet is larger than the widening at the upper end on the inlet side.

**10.** The extruding head according to Claim 9, **characterized by** the fact that the sleeve (3) contains a cylindrical center section (5) between the conical widenings (6, 6').

**11.** The extruding head for extrusion blow-molding plastic containers, comprising

an annular die that contains an arbor (1) and an annular die body (2),

an elastically deformable sleeve (3), and

adjusting devices (4) for radially deforming the elastic sleeve (3),

wherein the sleeve (3) that is arranged at the end on the die outlet side limits a die gap, the gap width of which can be varied by axially adjusting the arbor (1) and/or the die body (2) and the geometry of which can be influenced during the extrusion of a tubular preform by deforming the sleeve (3), and wherein the sleeve (3) is guided in a radially movable fashion on sliding surfaces (7, 8) that contact the top and the bottom of the sleeve (3), **characterized by** the fact

that the sleeve (3) that is arranged on the arbor (1) contains a conical widening toward the upper end on the inlet side and/or a conical paper toward the end on the die outlet side, wherein the outside diameter ($D_1$) of the sleeve (3) measured on the upper end face is larger than the outside diameter ($D_2$) of the sleeve at the die outlet, and by the fact

that the wall profile of the sleeve (3) and the height of the points of application of the forces generated by the adjusting devices (4) are adapted to one another along the sleeve (3) in such a way that the upper end face of the sleeve (3) which is guided on a sliding surface (7) of the die body (2) at least approximately maintains its plane-parallel alignment referred to the sliding surface during a deformation of the sleeve (3).

**12.** The extruding head according to Claim 11, **characterized by** the fact that the sleeve (3) that is arranged on the arbor (1) is realized cylindrically and only contains a conically widening collar (9) at the upper end on the inlet side.

**13.** The extruding head according to one of Claims 1-12, **characterized by** the fact that the diameter ($d_1$, $D_1$) of the sleeve (3) at the upper end on the inlet side is adapted to the inside diameter ($d_2$, $D_2$) of the sleeve at the die outlet in dependence on the pressure profile being adjusted in the channel for the molten mass in the flow direction in such a way that the axial force that acts downward in the inlet region of the sleeve (3) due to the pressure of the molten mass can be largely compensated, namely by at least 50 %, by means of the lower pressure of the molten mass at the die outlet which exerts an upwardly directed force upon the sleeve (3).

**14.** The extruding head according to one of Claims 1-13, **characterized by** the fact that the points of application of the forces generated by the adjusting devices (4) are arranged in a cross-sectional plane that is defined in such a way that distortions of no more than 60 μm occur in the axial direction on the upper end face of the sleeve (3) at the maximum sleeve deformation.

**15.** The extruding head according to one of Claims 1-14, **characterized by** the fact that the sleeve (3) contains at least one outer collar that is designed in such a way that the surface deviation moment determined for the wall profile of the sleeve is approximately zero at the surface center of gravity, and by the fact that the points of application of the forces generated by the adjusting devices (4) are arranged in a cross-sectional plane in which the surface center of gravity of the wall profile determined in a longitudinal section lies.

**16.** The extruding head according to one of Claims 1-14, **characterized by** the fact that, if the sleeve (3) has such a wall profile that its surface deviation moment determined in the surface center of gravity significantly deviates from zero, the points of application of the forces generated by the adjusting devices are offset relative to the cross-sectional plane in which the surface center of gravity lies in a longitudinal section through the wall profile so as to compensate the surface deviation moment.

**17.** The extruding head according to one of Claims 1-16, **characterized by** the fact that the adjusting devices (4) are connected to the sleeve (3) underneath an upwardly inclined line of force application.

18. The extruding head according to one of Claims 1-17, **characterized by** the fact that the upper and the lower end face of the sleeve (3) adjoin sliding surfaces (7, 8) of the die body (2) in a radially movable fashion.

19. The extruding head according to one of Claims 1-18, **characterized by** the fact that the sleeve (3) is arranged at the outlet of the annular die without a support of its lower end face, wherein the sleeve contains a support surface for the radially movable support that is arranged on the circumference of the sleeve (3) and spaced apart from the lower sleeve end.

20. The extruding head according to Claim 19,
**characterized by** the fact that the upper end of the sleeve (3) contains a collar (9) that is held between sliding surfaces (7, 8) in a radially movable fashion.

21. The extruding head according to Claim 19, **characterized by** the fact that the sleeve (3) contains a support collar (11) underneath the cross-sectional plane in which the adjusting devices engage, wherein said support collar adjoins a holding ring (10) in a radially movable fashion, and by the fact that a thin-walled apron (12) that limits the channel for the molten mass is integrally formed [onto the sleeve] underneath the support collar (11).

22. The extruding head according to Claim 19, **characterized by** the fact that the circumference of the sleeve (3) contains cams (13) that adjoin a holding ring (10) in a radially movable fashion and are coupled to the adjusting devices (4).

23. The extruding head according to Claim 22, **characterized by** the fact that the sleeve (3) contains undercuts underneath the cams (13), wherein said undercuts form annular support surfaces that transform into the underside of the cams (13) without forming a step.

24. The extruding head according to one of Claims 1-23, **characterized by** the fact that the outer surface of the sleeve (3) is acted upon by a pressurized fluid that compensates an axial force exerted upon the sleeve due to the pressure in the channel for the molten mass.

25. The extruding head for extrusion blow-molding plastic containers, comprising

    an annular die that contains an arbor (1) and an annular die body (2),

    an elastically deformable sleeve (3), and

    adjusting devices (4) for radially deforming the elastic sleeve (3),

    wherein the sleeve (3) that is arranged at the end on the die outlet side limits a die gap, the gap width of which can be varied by axially adjusting the arbor (1) and/or the die body (2) and the geometry of which can be influenced during the extrusion of a tubular preform by deforming the sleeve (3), and wherein the sleeve (3) is guided in a radially movable fashion on sliding surfaces (7, 8) that contact the top and the bottom of the sleeve (3), **characterized by** the fact that the sleeve (3) is supported in the axial direction on springs (14) or equally acting elements for exerting a force in order to compensate an axial force exerted upon the sleeve (3) by the pressure of the molten mass.

26. The extruding head according to Claim 25, **characterized by** the fact that the elements for exerting a force can be controlled or regulated in a cyclic fashion depending on the prevailing pressure of the molten mass.

**Revendications**

1. Tête d'extrudeuse pour former par extrusion-soufflage des récipients de matière plastique avec

    une filière à fente annulaire, qui présente un poinçon (1) et un corps de filière (2) en forme d'anneau,

    un manchon (3) élastiquement déformable et

    des dispositifs d'ajustement (4) pour déformer radialement le manchon élastique (3),

dans laquelle le manchon (3) disposé au niveau de l'extrémité du côté de la sortie de la filière, délimite une fente de filière, dont la largeur de fente peut être modifiée par des mouvements d'ajustement axiaux du poinçon (1) et/ou du corps de filière (2) et dont la géométrie peut être influencée par une déformation du manchon (3) pendant l'extrusion d'une ébauche en forme de tuyau, et dans laquelle le manchon (3) est guidé de façon mobile et radiale sur des surfaces de glissement (7, 8), lesquelles soutiennent le manchon (3) vers le haut et vers le bas, **caractérisée en ce que**,
le manchon (3) est formé en tant que cylindre ou tube avec un profil longitudinal s'approchant de la forme cylindrique, depuis l'extrémité supérieure du côté de l'admission jusqu'à la sortie de la filière, le bord inférieur (15) du côté de l'intérieur du tube du manchon (3) forme le courant de masse fondue sortant de la filière à fente annulaire dans la section de sortie.

2. Tête d'extrudeuse selon la revendication 1, **caractérisée en ce que** le bord inférieur (15) du manchon (3) est arrondi ou présente un bord profilé (16) formant le courant sortant de masse fondu.

3. Tête d'extrudeuse selon la revendication 2, **caractérisée en ce que** le bord profilé (16) est formé en tant que surface chanfreinée conique.

4. Tête d'extrudeuse selon l'une quelconque des revendications 1 à 3, **caractérisée en ce que** le manchon (3) présente à au moins une extrémité, un collet de forme annulaire du côté externe en tant que surface de glissement.

5. Tête d'extrudeuse selon l'une quelconque des revendications 1 à 3, **caractérisée en ce que** le manchon (3) présente à au moins une extrémité, plusieurs projections disposées sur le pourtour extérieur, en tant que surface de glissement.

6. Tête d'extrudeuse pour former par extrusion-soufflage des récipients de matière plastique, avec

   une filière à fente annulaire, qui présente un poinçon (1) et un corps de filière (2) de forme annulaire,

   un manchon élastiquement déformable (3) et

   des dispositifs d'ajustement (4) pour déformer radialement le manchon élastique (3),

   dans laquelle le manchon (3) disposé au niveau de l'extrémité du côté de la sortie de filière, délimite une fente de filière, dont la largeur de fente peut être modifiée par des mouvements d'ajustement axiaux du poinçon (1) et/ou du corps de filière (2) et dont la géométrie peut être influencée par déformation du manchon (3) pendant l'extrusion d'une ébauche en forme de tuyau, dans laquelle le manchon (3) est guidé de façon radiale de mobile sur des surfaces de glissement (7, 8), lesquelles soutiennent le manchon (3) vers le haut et vers le bas, et dans laquelle le manchon (3) disposé dans la corps de filière présente un évasement conique en direction de l'extrémité du côté de la sortie de filière et le diamètre intérieur ($d_1$) du manchon (3), mesuré au niveau de la surface frontale supérieure, est inférieur au diamètre intérieur du manchon ($d_2$) au niveau de la sortie de filière, **caractérisée en ce que**,
   le profil de paroi du manchon (3) et la hauteur des points d'application d'une force, excentrés, dans la direction longitudinale du manchon, des dispositifs d'ajustement (4) le long du manchon (3) sont adaptés mutuellement de telle sorte que la surface frontale supérieur du manchon (3) guidée sur une surface de glissement (7) du corps de la filière (2) conserve au moins approximativement son parallélisme plan par rapport à la surface de glissement lors d'une déformation du manchon (3).

7. Tête d'extrudeuse pour former par extrusion-soufflage des récipients de matière plastique, avec

   une filière à fente annulaire, qui présente un poinçon (1) et un corps de filière (2) de forme annulaire,

   un manchon élastiquement déformable (3) et

   des dispositifs d'ajustement (4) pour déformer radialement le manchon élastique (3),

   dans laquelle le manchon (3) disposé au niveau de l'extrémité du côté de la sortie de filière, délimite une fente de filière, dont la largeur de fente peut être modifiée par des mouvements d'ajustement axiaux du poinçon (1) et/ou du corps de filière (2) et dont la géométrie peut être influencée par déformation du manchon (3) pendant l'extrusion d'une ébauche en forme de tuyau, dans laquelle le manchon (3) est guidé de façon radiale et mobile sur des surfaces de glissement (7, 8), lesquelles soutiennent le manchon (3) vers le haut et vers le bas, et dans laquelle le manchon disposé dans le corps de filière (3) présente un évasement conique en direction de l'extrémité du côté de la sortie de filière et le diamètre intérieur ($d_1$) du manchon (3), mesuré au niveau de la surface frontale supérieure, est inférieur au diamètre intérieur du manchon ($d_2$) au niveau de la sortie de filière, **caractérisée en ce que**,

les points d'application de force des dispositifs d'ajustement (4) sont fixés sur la demi-hauteur du manchon (3) et le manchon (3) à au moins une extrémité est formé avec un collet du côté externe, qui est conçu de telle façon que la surface frontale supérieure du manchon (3), guidée sur une surface de glissement (7) du corps de filière (2), conserve au moins approximativement son parallélisme plan par rapport à la surface de glissement lors d'une déformation du manchon (3).

8. Tête d'extrudeuse selon la revendication 6 ou 7, **caractérisée en ce que** la zone d'admission du manchon (3) est formée en tant que cylindre ou tube avec un profil longitudinal adapté à la forme cylindrique.

9. Tête d'extrudeuse selon la revendication 6 ou 7, **caractérisée en ce que** le manchon (3) présente un évasement conique aux deux extrémités, l'évasement conique au niveau de la sortie de filière étant plus grand que l'évasement au niveau de l'extrémité supérieure du côté de l'admission.

10. Tête d'extrudeuse selon la revendication 9, **caractérisée en ce que** le manchon (3) présente un secteur central (5) cylindrique entre les évasements coniques (6, 6').

11. Tête d'extrudeuse pour former par extrusion-soufflage des récipients de matière plastique avec

une filière à fente annulaire, qui présente un poinçon (1) et un corps de filière (2) de forme annulaire,

un manchon élastiquement déformable (3) et

des dispositifs d'ajustement (4) pour déformer radialement le manchon élastique (3),

dans laquelle le manchon (3) disposé au niveau de l'extrémité du côté de la sortie de filière, délimite une fente de filière dont la largeur de fente peut être modifiée par des mouvements d'ajustement axiaux du poinçon (1) et/ou du corps de filière (2) et dont la géométrie peut être influencée par une déformation du manchon (3) pendant l'extrusion d'une ébauche en forme de tuyau, et dans laquelle le manchon (3) est mobile radialement sur des surfaces de glissement (7, 8), lesquelles soutiennent le manchon (3) vers le haut et vers le bas, **caractérisée en ce que**,

le manchon (3) disposé sur le poinçon (1) présente un évasement conique en direction de l'extrémité supérieure du côté de l'admission et/ou un étranglement conique en direction de l'extrémité du côté de la sortie de filière et le diamètre externe ($D_1$) du manchon (3), mesuré au niveau de la surface frontale supérieure, est supérieur au diamètre externe du manchon ($D_2$) au niveau de la sortie de filière et le profil de paroi du manchon (3) et la hauteur des points d'application de force des dispositifs d'ajustement (4) le long du manchon (3) sont adaptés mutuellement de telle sorte que la surface frontale supérieure du manchon (3), guidée sur une surface de glissement (7) du corps de filière (2), conserve au moins approximativement son parallélisme plan par rapport à la surface de glissement lors d'une déformation du manchon (3).

12. Tête d'extrudeuse selon la revendication 11, **caractérisée en ce que** le manchon (3) disposé sur le poinçon (1) est formé d'une façon cylindrique et présente uniquement un collet (9) s'évasant de façon conique en direction de l'extrémité supérieure du côté de l'admission.

13. Tête d'extrudeuse selon l'une quelconque des revendications 1 à 12, **caractérisée en ce que** le diamètre ($d_1$, $D_1$) du manchon (3) au niveau de l'extrémité supérieure du côté de l'admission, est adapté en fonction du profil de pression s'établissant dans le canal de masse fondue dans la direction de l'écoulement, au diamètre interne du manchon ($d_2$, $D_2$) au niveau de la sortie de filière de telle sorte que la force axiale agissant sur le manchon (3) vers le bas, exercée par la pression de la masse fondue dans la zone d'admission peut être compensée en grande partie, toutefois d'au moins 50 %, par la pression de la masse fondue, plus faible, régnant au niveau de la sortie de filière, laquelle pression exerce une force dirigée vers la haut sur le manchon (3).

14. Tête d'extrudeuse selon l'une quelconque des revendications 1 à 13, **caractérisée en ce que** les points d'application de force des dispositifs d'ajustement (4) sont disposés selon un plan de coupe transversale qui est fixé de telle façon qu'au niveau de la surface frontale supérieure du manchon (3), il se produit des gauchissements d'au maximum 60 µm dans la direction axiale lors d'une déformation maximale du manchon.

15. Tête d'extrudeuse selon l'une quelconque des revendications 1 à 14, **caractérisée en ce que** le manchon (3) présente au moins un collet du côté externe, qui est conçu de telle façon que le produit d'inertie surfacique déterminé pour le profil de paroi du manchon est approximativement nul au centre de gravité surfacique, et que les points d'application de la force des dispositifs d'ajustement (4) sont disposés dans un plan de coupe transversale dans lequel se trouve le centre de gravité surfacique du profil de paroi, déterminé dans la coupe longitudinale.

16. Tête d'extrudeuse selon l'une quelconque des revendications 1 à 14, **caractérisée en ce que**, pour un profil de paroi du manchon (3) dont le produit d'inertie surfacique déterminé au centre de gravité surfacique s'écarte essentiellement de la valeur zéro, les points d'application de force des dispositifs d'ajustement sont disposés de manière décalée en face du plan de coupe transversale pour compenser le produit d'inertie surfacique, plan dans lequel se trouve le centre de gravité surfacique du profilé de paroi considéré dans la coupe longitudinale.

17. Tête d'extrudeuse selon l'une quelconque des revendications 1 à 16, **caractérisée en ce que** les dispositifs d'ajustement (4) sont raccordés au manchon (3) sous une ligne d'application des forces dirigée de façon inclinée vers le haut.

18. Tête d'extrudeuse selon l'une quelconque des revendications 1 à 17, **caractérisée en ce que** le manchon (3) sur ses surfaces frontales supérieure et inférieure, repose de manière radiale et mobile sur des surfaces de glissement (7, 8) du corps de filière (2).

19. Tête d'extrudeuse selon l'une quelconque des revendications 1 à 18, **caractérisée en ce que** le manchon (3) est disposé à la sortie de la filière à fente annulaire, sans soutien inférieur du côté frontal et présente une surface de soutien pour le support mobile radial qui est disposé sur le pourtour du manchon (3) à distance de l'extrémité inférieure du manchon.

20. Tête d'extrudeuse selon la revendication 19, **caractérisée en ce que** le manchon (3) présente un collet (9) au niveau de son extrémité supérieure, qui est maintenu de façon radiale et mobile entre des surfaces de glissement (7, 8).

21. Tête d'extrudeuse selon la revendication 19, **caractérisée en ce que** le manchon (3) sous le plan de coupe transversale dans lequel interviennent les dispositifs d'ajustement, présente un collet de soutien (11) qui repose de façon radiale et mobile sur une bague de support (10) et qu'une jupe (12) à paroi mince limitant le canal de la masse fondue est formée sous le collet de soutien (11).

22. Tête d'extrudeuse selon la revendication 19, **caractérisée en ce que** le manchon (3) présente des cames (13) du côté périphérique qui reposent de façon radiale et mobile sur une bague de support (10) et sont couplées aux dispositifs d'ajustement (4).

23. Tête d'extrudeuse selon la revendication 22, **caractérisée en ce que** le manchon (3) présente une contre-dépouille sous les cames (13), qui forme une surface de soutien de forme annulaire se raccordant de façon uniforme au côté inférieur des cames (13).

24. Tête d'extrudeuse selon l'une quelconque des revendications 1 à 23, **caractérisée en ce que** le manchon (3) sur son côté externe d'enveloppe est alimenté par un fluide se trouvant sous pression, qui compense une force axiale exercée sur le manchon par la pression dans le canal de masse fondue.

25. Tête d'extrudeuse pour former par extrusion-soufflage des récipients de matière plastique avec

une filière à fente annulaire, qui présente un poinçon (1) et un corps de filière (2) de forme annulaire,

un manchon élastiquement déformable (3) et

des dispositifs d'ajustement (4) pour déformer. radialement le manchon élastique (3),

dans laquelle le manchon disposé au niveau de l'extrémité du côté de la sortie de filière (3), délimite une fente de filière, dont la largeur de fente peut être modifiée par des mouvements d'ajustement axiaux du poinçon (1) et/ou du corps de filière (2) et dont la géométrie peut être influencée par déformation du manchon (3) pendant l'extrusion d'une ébauche en forme de tuyau, et dans laquelle le manchon (3) est guidé de façon radiale et mobile sur des surfaces de glissement (7, 8), lesquelles soutiennent le manchon (3) vers le haut et vers le bas, **caractérisée en ce que** le manchon (3) est supporté sur des ressorts (14) ou des éléments mécaniques équivalents dans la direction axiale, qui compensent une force axiale exercée sur le manchon (3) par la pression de la masse fondue.

26. Tête d'extrudeuse selon la revendication 25, **caractérisée en ce que** les éléments mécaniques peuvent être commandés ou régulés de manière cyclique en fonction de la pression régnante de la masse fondue.

Fig.1

EP 1 066 948 B1

Fig.2

20

Fig.3

Fig.4

Fig.5

*Fig. 6*

EP 1 066 948 B1

Fig.8

Fig.7

Fig.9

*Fig.10a*

3

*Fig.10b*

3

*Fig.10c*

3

*Fig.10d*

3

*Fig.10e*

3

*Fig.10f*

3

*Fig.10g*

3

*Fig.10h*

3

3

*Fig.10i*

_Fig.11_

EP 1 066 948 B1

Fig.12

30

Fig.13

Fig.14

EP 1 066 948 B1

Fig.15

32